# EUROPÄISCHE PATENTANMELDUNG

(11) **EP 4 466 980 A1**
(43) Veröffentlichungstag der Anmeldung: **27.11.2024**
(21) Anmeldenummer: 24174249.3
(22) Anmeldetag: 06.05.2024
(51) Int. Cl.: A01G 3/025, B25F 5/02, B26B 13/26

(54) **VERBINDUNGSVORRICHTUNG, VERLÄNGERUNGSSTÜCK, WERKZEUGAUFSATZ UND WERKZEUGSYSTEM**

(30) Priorität: 23.05.2023 DE 102023204786
(71) Anmelder: Robert Bosch GmbH, 70442 Stuttgart (DE)
(72) Erfinder: Harris, Alex, ip 142rj suffolk Stowmarket (GB)

(57) **Zusammenfassung**

Die Erfindung geht aus von einer Verbindungsvorrichtung (10a, 10a'; 10b; 10c; 10d) für ein, insbesondere stabgebundenes, Werkzeug (12a), vorzugsweise eine Werkzeugmaschine, oder für ein Werkzeugsystem (50a; 50b; 50c; 50d), mit zumindest einem Verbindungsstück (14a, 14a'; 14b; 14c; 14d) zur Verbindung mit einem weiteren Verbindungsstück (16a, 16a`; 16b; 16c; 16d), mit einer Befestigungseinheit (18a; 18b; 18c; 18d) zur Befestigung der Verbindungsstücke (14a, 14a', 16a, 16a'; 14b, 16b; 14c, 16c; 14d, 16d) aneinander und mit einer Koppeleinheit (20a; 20b; 20c; 20d), die zumindest in einem gekoppelten Zustand dazu vorgesehen ist, eine Antriebskraft, insbesondere eine Zug- und/oder eine Druckkraft, zwischen den Verbindungsstücken (14a, 14a', 16a, 16a'; 14b, 16b; 14c, 16c; 14d, 16d) zu übertragen. Es wird vorgeschlagen, dass die Koppeleinheit (20a; 20b; 20c; 20d) zumindest zwei einander gegenüberliegende Koppelstellen (22a, 24a; 22b; 22d, 24d) zur Kopplung mit einer Gegenkoppeleinheit (26a; 26b; 26c; 26d) des weiteren Verbindungsstücks (16a; 16b; 16c; 16d) aufweist.

## Beschreibung

### Stand der Technik

Es ist bereits eine Verbindungsvorrichtung für ein Werkzeug mit zumindest einem Verbindungsstück zur Verbindung mit einem weiteren Verbindungsstück, mit einer Befestigungseinheit zur Befestigung der Verbindungsstücke aneinander und mit einer Koppeleinheit, die zumindest in einem gekoppelten Zustand dazu vorgesehen ist, eine Antriebskraft zwischen den Verbindungsstücken zu übertragen, vorgeschlagen worden.

### Offenbarung der Erfindung

Die Erfindung geht aus von einer Verbindungsvorrichtung für ein, insbesondere stabgebundenes, Werkzeug, vorzugsweise eine Werkzeugmaschine, oder für ein Werkzeugsystem, mit zumindest einem Verbindungsstück zur Verbindung mit einem weiteren Verbindungsstück, mit einer Befestigungseinheit zur Befestigung der Verbindungsstücke aneinander und mit einer Koppeleinheit, die zumindest in einem gekoppelten Zustand dazu vorgesehen ist, eine Antriebskraft, insbesondere eine Zug- und/oder eine Druckkraft, zwischen den Verbindungsstücken zu übertragen.

Es wird vorgeschlagen, dass die Koppeleinheit zumindest zwei einander gegenüberliegende Koppelstellen zur Kopplung mit einer Gegenkoppeleinheit des weiteren Verbindungsstücks aufweist.

Durch die erfindungsgemäße Ausgestaltung der Verbindungsvorrichtung kann eine besonders zuverlässige Kopplung zur Übertragung einer Antriebskraft zwischen den Verbindungsstücken realisiert werden. Vorteilhaft kann eine besonders sichere Kopplung realisiert werden. Kräfte zwischen der Gegenkoppeleinheit und der Koppeleinheit können besonders gleichmäßig verteilt werden. Vorteilhaft kann einer mechanischen Überbelastung durch eine einseitige Überbelastung entgegengewirkt werden. Es kann eine besonders langlebige Koppeleinheit zur Verfügung gestellt werden.

Das Werkzeug ist vorzugsweise als ein Gartenwerkzeug, bevorzugt als ein stabgebundenes Gartenwerkzeug, beispielsweise als eine Baumschere, insbesondere als eine Stab-Gartenschere, als eine Stab-Astschere, als ein Hochentaster, als eine Stab-Kettensäge oder als ein anderes, einem Fachmann als sinnvoll erscheinendes Werkzeug ausgebildet. Insbesondere ist das, vorzugsweise stabgebundene, Werkzeug zur Durchführung von Arbeiten, insbesondere von Schneidarbeiten, in höhergelegenen Bereichen als einer Körpergröße eines durchschnittlichen Benutzers des Werkzeugs vorgesehen. Insbesondere ist das, vorzugsweise stabgebundene, Werkzeug dazu vorgesehen, Äste von Bäumen, Hecken o. dgl. zu schneiden, zu sägen und/oder zu trimmen. Unter "vorgesehen" soll speziell eingerichtet, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Das Werkzeug ist insbesondere als eine Werkzeugmaschine, vorzugsweise als eine Handwerkzeugmaschine, ausgebildet. Das Werkzeug weist insbesondere eine Antriebseinheit, beispielsweise einen Elektromotor, einen Verbrennungsmotor oder dergleichen auf. Die Antriebseinheit ist insbesondere zu einem Antrieb eines Einsatzwerkzeugs vorgesehen. Das Einsatzwerkzeug ist beispielsweise eine Schere, ein Sägeblatt oder dergleichen. Das Einsatzwerkzeug ist vorzugsweise Teil eines Werkzeugaufsatzes. Der Werkzeugaufsatz ist insbesondere mit dem Werkzeug verbindbar. Die Antriebseinheit ist vorzugsweise als ein Linearantrieb ausgebildet. Es ist denkbar, dass das Werkzeug als ein akkubetriebenes Werkzeug oder als ein netzbetriebenes Werkzeug ausgebildet ist. Alternativ ist jedoch auch denkbar, dass das Werkzeug als ein handgetriebenes Werkzeug, insbesondere als ein handgetriebenes Gartenwerkzeug, ausgebildet ist.

Bevorzugt sind/ist das Verbindungsstück und/oder das weitere Verbindungsstück jeweils an zumindest einem Bauteil des Werkzeugs und/oder des Werkzeugsystems angeordnet und vorzugsweise als Teil des jeweiligen Bauteils ausgebildet. Insbesondere ist die Verbindungsvorrichtung dazu vorgesehen, die Bauteile aneinander zu befestigen und zu einer Übertragung der Antriebskraft miteinander zu verbinden. Der Werkzeugaufsatz weist beispielsweise die Verbindungsvorrichtung und das Werkzeug oder ein Verlängerungsstück weist das weitere Verbindungsstück auf. Das Verlängerungsstück ist vorzugsweise als Verlängerung zwischen dem Werkzeug und dem Werkzeugaufsatz vorgesehen. Bevorzugt weist das Verlängerungsstück eine weitere Verbindungsvorrichtung auf, welche insbesondere analog zu der oben genannten Verbindungsvorrichtung ausgebildet ist. Das weitere Verbindungsstück ist insbesondere über eine Bewegung entlang einer zumindest im Wesentlichen geradlinigen Verbindungsachse mit dem Verbindungsstück verbindbar, insbesondere sind die Verbindungsstücke entlang der Verbindungsachse ineinanderschiebbar, vorzugsweise zur Befestigung der Verbindungsstücke aneinander mittels der Befestigungseinheit.

Bevorzugt ist die Befestigungseinheit spannzangenartig ausgebildet. Die Befestigungseinheit weist insbesondere zumindest ein Befestigungselement auf. Insbesondere in zumindest einem Ausführungsbeispiel ist das Befestigungselement als eine Drehhülse ausgebildet. Das Befestigungselement weist vorzugsweise ein Gewinde, insbesondere ein Innengewinde auf. Alternativ ist jedoch auch denkbar, dass das Befestigungselement als ein Rastelement, beispielsweise als ein Rasthaken, als eine Rastausnehmung oder dergleichen ausgebildet ist.

Vorzugsweise umfasst das Verbindungsstück zumindest einen Grundkörper. Das Befestigungselement ist insbesondere an dem Grundkörper des Verbindungsstücks angeordnet. Der Grundkörper ist beispielsweise als ein Rohr ausgebildet. Ein Querschnitt des Grundkörpers, welcher insbesondere in einer Ebene senkrecht zu einer Haupterstreckungsachse des Grundkörpers verläuft, des Verbindungsstücks ist beispielsweise kreisförmig, polygonal, rechteckig, quadratisch ausgebildet oder weist eine andere, einem Fachmann als sinnvoll erscheinende Form auf. Bevorzugt weist der Querschnitt des Grundkörpers des Verbindungsstücks eine Kreisform mit zwei, insbesondere auf voneinander abgewandten Seiten des Grundkörpers des Verbindungsstücks, abgeflachten, insbesondere ebenen, Abschnitten auf. Unter einer "Haupterstreckungsachse" eines Objekts kann dabei insbesondere eine Achse verstanden werden, welche parallel zu einer längsten Kante eines kleinsten geometrischen Quaders verläuft, welcher das Objekt gerade noch vollständig umschließt, und insbesondere durch den Mittelpunkt des Quaders verläuft.

Insbesondere in zumindest einem Ausführungsbeispiel ist das Befestigungselement drehbar an dem Grundkörper des Verbindungsstücks gelagert. Das Befestigungselement ist vorzugsweise entlang einer Haupterstreckungsachse des Verbindungsstücks, insbesondere der Haupterstreckungsachse des Grundkörpers des Verbindungstücks, bewegbar, bevorzugt relativ zu dem Grundkörper des Verbindungsstücks.

Vorzugsweise umfasst das weitere Verbindungsstück eine Gegenbefestigungseinheit zur Befestigung der Verbindungsstücke aneinander. Die Gegenbefestigungseinheit ist insbesondere dazu vorgesehen, zur Befestigung der Verbindungsstücke aneinander mit der Befestigungseinheit zusammenzuwirken. Bevorzugt ist das Befestigungselement dazu vorgesehen, mit der Gegenbefestigungseinheit zu einer Befestigung der Verbindungsstücke aneinander zusammenzuwirken. Die Gegenbefestigungseinheit weist vorzugsweise zumindest ein Gegenbefestigungselement auf, welches insbesondere dazu vorgesehen ist, mit der Befestigungseinheit, vorzugsweise dem Befestigungselement der Befestigungseinheit zu einer Befestigung der Verbindungsstücke aneinander zusammenzuwirken. Insbesondere ist das Gegenbefestigungselement an dem weiteren Verbindungsstück, vorzugsweise an einem Grundkörper des weiteren Verbindungsstücks, angeordnet. Das Gegenbefestigungselement ist insbesondere korrespondierend zu dem Befestigungselement ausgebildet. Das Gegenbefestigungselement ist beispielsweise als ein Gewinde, insbesondere als ein Außengewinde, ausgebildet. Alternativ ist denkbar, dass das Gegenbefestigungselement als eine Rastausnehmung, als ein Rasthaken oder als ein anderes, einem Fachmann als sinnvoll erscheinendes Befestigungsmittel ausgebildet ist. Der Grundkörper des weiteren Verbindungsstücks und/oder das Gegenbefestigungselement sind/ist insbesondere korrespondierend zu dem Grundkörper des Verbindungsstücks und/oder zu dem Befestigungselement ausgebildet, weisen/weist vorzugsweise einen zu dem Querschnitt des Grundkörper des Verbindungsstücks und/oder zu dem Befestigungselement korrespondierenden Querschnitt auf, vorzugsweise derart, dass die Verbindungsstücke zu einer Befestigung aneinander zumindest teilweise ineinanderschiebbar sind.

Die Befestigungseinheit weist vorzugsweise zumindest eine Klemmrampe auf. Alternativ oder zusätzlich ist denkbar, dass die Gegenbefestigungseinheit eine Klemmrampe aufweist. Beispielsweise ist die Klemmrampe der Befestigungseinheit dazu vorgesehen, zu einer Befestigung der Verbindungsstücke aneinander mit einer Klemmfläche, insbesondere der Klemmrampe, der Gegenbefestigungseinheit zusammenzuwirken. Vorzugsweise sind durch die Befestigungseinheit und/oder die Gegenbefestigungseinheit die Verbindungsstücke rotatorisch und/oder translatorisch, insbesondere in axialer Richtung, relativ zueinander fixierbar, bevorzugt zumindest die Grundkörper der Verbindungsstücke.

Die Koppeleinheit weist vorzugsweise zumindest ein Koppelelement, besonders bevorzugt zwei Koppelelemente auf. Es ist jedoch auch denkbar, dass die Koppeleinheit mehr als zwei Koppelelemente aufweist. Es ist denkbar, dass das zumindest eine Koppelelement die zwei Koppelstellen aufweist, oder dass die Koppelelemente jeweils zumindest eine Koppelstelle aufweisen. Die Koppelstellen sind insbesondere bezüglich der Haupterstreckungsachse des Verbindungsstücks, insbesondere des Grundkörpers des Verbindungsstücks, gegenüberliegend angeordnet. Die Koppelstellen sind vorzugsweise symmetrisch zu der Haupterstreckungsachse des Verbindungsstücks angeordnet.

Das zumindest eine Koppelelement ist insbesondere an dem Grundkörper des Verbindungsstücks angeordnet. Bevorzugt ist das zumindest eine Koppelelement in zumindest einem Betriebszustand, insbesondere in einem gekoppelten Zustand der Koppeleinheit, an oder in dem Grundkörper des Verbindungsstücks zumindest im Wesentlichen parallel zur Verbindungsachse geführt. Unter "im Wesentlichen parallel" kann hier eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise ist das zumindest eine Koppelelement zumindest größtenteils innerhalb des Grundkörpers des Verbindungsstücks angeordnet. Unter "größtenteils" kann zumindest 50 %, bevorzugt zumindest 75 % und besonders bevorzugt zumindest 90 % eines Gesamtvolumens und/oder einer Gesamtmasse eines Objekts, verstanden werden.

Die Gegenkoppeleinheit weist vorzugsweise zumindest ein Gegenkoppelelement auf. Vorzugsweise umfasst das weitere Verbindungsstück zumindest einen Grundkörper. Bevorzugt ist das Gegenkoppelelement an oder in dem Grundkörper des weiteren Verbindungsstücks angeordnet. Das Gegenkoppelelement ist vorzugsweise zumindest im Wesentlichen parallel zur Verbindungsachse geführt. Es ist denkbar, dass das Gegenkoppelelement zumindest größtenteils innerhalb des Grundkörpers des weiteren Verbindungsstücks angeordnet ist. Es ist auch denkbar, dass das Gegenkoppelement zumindest teilweise aus dem Grundkörper des weiteren Verbindungsstücks hinausragt. Vorzugsweise sind die Koppelstellen symmetrisch zu dem Gegenkoppelelement angeordnet, insbesondere zumindest in einem aneinander befestigten Zustand der Verbindungsstücke.

Insbesondere ist die Koppeleinheit dazu vorgesehen, bei einer Befestigung der Verbindungsstücke aneinander mittels der Befestigungseinheit im Wesentlichen selbständig in den gekoppelten Zustand überzugehen. Unter "im Wesentlichen selbstständig" soll insbesondere verstanden werden, dass eine Baueinheit, insbesondere die Koppeleinheit, durch eine spezielle Betätigung oder Aktion, eine bestimmte Tätigkeit und/oder einen bestimmten Zustand, insbesondere einen Übergang in den gekoppelten Zustand, ohne weitere Tätigkeiten oder Aktionen eines Benutzers ausführt und/oder einnimmt. Insbesondere ist zu einem Ausführen/Einnehmen der Tätigkeit/des Zustands keine weitere externe Krafteinwirkung nötig.

Die zumindest im Wesentlichen geradlinige Verbindungsachse verläuft vorzugsweise zumindest im Wesentlichen parallel zu einer Haupterstreckungsachse der Verbindungsvorrichtung, insbesondere der Haupterstreckungsachse des Verbindungsstücks, vorzugsweise der Haupterstreckungsachse des Grundkörpers des Verbindungsstücks und/oder einer Mittelachse des weiteren Verbindungsstücks, insbesondere einer Haupterstreckungsachse des Grundkörpers des weiteren Verbindungsstücks. Unter "im Wesentlichen parallel" soll insbesondere eine Ausrichtung einer Geraden, einer Ebene oder einer Richtung, insbesondere der Verbindungsachse, relativ zu einer anderen Geraden, einer anderen Ebene oder einer Bezugsrichtung, insbesondere der vorher genannten Achse, verstanden werden, wobei die Gerade, die Ebene oder die Richtung gegenüber der anderen Geraden, der anderen Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2°, aufweist.

Vorzugsweise umfasst die Verbindungsvorrichtung, insbesondere das Verbindungsstück, zumindest ein Führungselement, welches dazu vorgesehen ist, das Verbindungsstück und das weitere Verbindungsstück bei dem Ineinanderschieben zu führen. Bevorzugt weist das weitere Verbindungsstück zumindest ein Gegenführungselement auf, welches dazu vorgesehen ist, das Verbindungsstück und das weitere Verbindungsstück bei dem Ineinanderschieben zu führen. Das Führungselement ist insbesondere dazu vorgesehen, zu einer Führung der Verbindungsstücke bei dem Ineinanderschieben mit dem Gegenführungselement zusammenzuwirken. Bevorzugt sind/ist das Führungselement und/oder das Gegenführungselement dazu vorgesehen, zum Ineinanderschieben des Verbindungsstücks und des weiteren Verbindungsstücks eine Ausrichtung des Verbindungsstücks und des weiteren Verbindungsstücks, insbesondere um eine zumindest im Wesentlichen parallel zur Verbindungsachse ausgerichtete Achse, relativ zueinander vorzugeben. Das Führungselement und/oder das weitere Führungselement können/kann beispielsweise als Fortsätze/Fortsatz, als Schiene/n oder dergleichen ausgebildet sein. Bevorzugt ist das Führungselement einstückig mit dem Grundkörper des Verbindungsstücks ausgebildet, insbesondere durch den Grundkörper des Verbindungsstücks gebildet. Unter "einstückig" kann zumindest stoffschlüssig verbunden verstanden werden, beispielsweise durch einen Schweißprozess, einen Lötprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ ist jedoch auch denkbar, dass das Führungselement separat von dem Grundkörper des Verbindungsstücks ausgebildet ist. Bevorzugt ist das Gegenführungselement einstückig mit dem Grundkörper des weiteren Verbindungsstücks ausgebildet, insbesondere durch den Grundkörper des weiteren Verbindungsstücks gebildet. Alternativ ist jedoch auch denkbar, dass das Gegenführungselement separat von dem Grundkörper des weiteren Verbindungsstücks ausgebildet ist.

Beispielsweise weist das Gegenkoppelelement einen Bolzen, einen Rasthaken oder dergleichen auf. Vorzugsweise weist das Gegenkoppelelement eine Strebe auf. Der Bolzen ist insbesondere an der Strebe angeordnet, vorzugsweise einstückig mit der Strebe ausgebildet. Der Bolzen bzw. der Rasthaken oder dergleichen ist insbesondere dazu vorgesehen, mit den Koppelstellen zur Herstellung des gekoppelten Zustands zusammenzuwirken. Die Koppelstellen sind insbesondere symmetrisch zu dem Bolzen bzw. dem Rasthaken angeordnet, vorzugsweise zumindest in einem aneinander befestigten Zustand der Verbindungsstücke.

Die Koppelstellen sind bevorzugt als, insbesondere einander gegenüberliegende, Ausnehmungen in den Koppelelementen ausgebildet. Insbesondere ist der Bolzen bzw. der Rasthaken oder dergleichen im gekoppelten Zustand in den als Ausnehmungen in den Koppelelementen ausgebildeten Koppelstellen ausgebildet. Die als Ausnehmungen ausgebildeten Koppelstellen weisen beispielsweise eine ovale Form auf. Alternativ sind jedoch auch andere, einem Fachmann als sinnvoll erscheinende Formen für die als Ausnehmungen ausgebildeten Koppelstellen denkbar. Ferner ist alternativ denkbar, dass die Koppelstellen jeweils durch Rastnasen, Rasthaken oder dergleichen ausgebildet sind und das Gegenkoppelelement zumindest eine Ausnehmung oder dergleichen aufweist.

Weiterhin wird vorgeschlagen, dass die Koppeleinheit zumindest zwei, insbesondere voneinander beabstandete, vorzugsweise die zuvor bereits genannten, Koppelelemente aufweist, an welchen jeweils eine der Koppelstellen angeordnet ist. Vorteilhaft können bei einem Betrieb entstehende Kräfte auf mehrere Bauteile, insbesondere die zumindest zwei Koppelemente verteilt werden. Es kann eine besonders langlebige und/oder zuverlässige Koppeleinheit zur Verfügung gestellt werden. Die Koppelelemente sind beispielsweise gabelartig, insbesondere als Streben, ausgebildet. Die Koppelelemente sind insbesondere an einem Ende an dem Verbindungsstück befestigt, vorzugsweise an dem Verbindungsstück gelagert. Die Koppelelemente weisen jeweils ein freies Ende auf. Die freien Enden sind auf einer zu dem Ende, an welchem die Koppelelemente an dem Verbindungsstück befestigt, insbesondere gelagert, sind, abgewandten Seite der Koppelelemente angeordnet. Vorzugsweise sind zumindest die freien Enden der Koppelelemente relativ zueinander bewegbar, insbesondere zum Lösen oder Erzeugen des gekoppelten Zustands. Insbesondere sind die freien Enden symmetrisch zu dem Gegenkoppelelement angeordnet. Es ist auch denkbar, dass die zwei Koppelelemente einstückig miteinander ausgebildet sind. Die Koppelelemente sind bevorzugt an den freien Enden trichterförmig ausgebildet. Die trichterförmige Ausgestaltung der freien Enden der Koppelelemente ist insbesondere zur Führung des Gegenkoppelelements beim Ineinanderschieben der Verbindungsstücke vorgesehen. Vorteilhaft kann die trichterförmige Ausgestaltung der freien Enden ein Auseinanderbewegen der Koppelelemente unterstützen.

Des Weiteren wird vorgeschlagen, dass die Koppelelemente aus einem federelastischen Material gebildet sind. Vorteilhaft können die Koppelelemente nach einer Auslenkung aus einer Startposition automatisch in Richtung der Startposition zurückbewegt werden. Vorteilhaft kann eine besonders einfache Konstruktion der Koppeleinheit realisiert werden. Es kann eine besonders langlebige und/oder zuverlässige Koppeleinheit realisiert werden. Bevorzugt sind die Koppelelemente in einer Übertragungsrichtung der Antriebskraft steif ausgebildet. Die Übertragungsrichtung der Antriebskraft verläuft insbesondere zumindest im Wesentlichen parallel zur Haupterstreckungsachse des Verbindungsstücks und/oder zur Haupterstreckungsachse des weiteren Verbindungsstücks. Die Koppelelemente sind insbesondere zu einer, vorzugsweise elastischen, Auslenkung, bevorzugt in einer zur Übertragungsrichtung und/oder zur Haupterstreckungsachse des Verbindungsstücks, bevorzugt des Grundkörpers des Verbindungsstücks, und/oder einer jeweiligen Haupterstreckungsachse der Koppelelemente zumindest im Wesentlichen senkrechten verlaufenden Richtung, vorgesehen. Unter "im Wesentlichen senkrecht" kann eine Ausrichtung einer Richtung relativ zu einer Bezugsrichtung verstanden werden, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die Koppelelemente sind vorzugsweise, insbesondere in Übertragungsrichtung der Antriebskraft, druck- und/oder zugbeständig ausgebildet. Die Koppelelemente sind beispielsweise aus einem Metall, insbesondere aus Federstahl oder dergleichen, aus einem elastischen Kunststoff oder einem anderen, einem Fachmann als sinnvoll erscheinenden federelastischen Material gebildet.

Außerdem wird vorgeschlagen, dass die Verbindungsvorrichtung eine Auslöseeinheit zum Lösen des gekoppelten Zustands aufweist, die dazu vorgesehen ist, bei deren Betätigung die zwei Koppelstellen auseinander zu bewegen, insbesondere um die Kopplung mit der Gegenkoppeleinheit zu lösen. Vorteilhaft kann der gekoppelte Zustand besonders einfach und/oder komfortabel gelöst werden. Bevorzugt ist die Auslöseeinheit dazu vorgesehen, die zwei Koppelelemente zum Lösen des gekoppelten Zustands auseinander zu bewegen. Vorzugsweise ist die Auslöseeinheit zum Lösen des gekoppelten Zustands dazu vorgesehen, die zwei Koppelelemente, bevorzugt die zwei Koppelstellen, von der Gegenkoppeleinheit, insbesondere dem Gegenkoppelelement, zu beabstanden. Insbesondere ist durch eine Betätigung der Auslöseeinheit in einem entkoppelten Zustand der Koppeleinheit der gekoppelte Zustand herstellbar. Die Auslöseeinheit ist vorzugsweise als mechanische Auslöseeinheit ausgebildet. Bevorzugt ist die Auslöseeinheit mechanisch betätigbar. Zusätzlich ist jedoch auch denkbar, dass die Auslöseeinheit elektronisch steuerbar ist. Die Auslöseeinheit weist insbesondere zumindest ein Auslöseelement auf, welches dazu vorgesehen ist, zum Herstellen und/oder Lösen des gekoppelten Zustands mit zumindest einem der zwei Koppelelemente zusammenzuwirken. Das Auslöseelement ist vorzugsweise an dem Verbindungsstück, insbesondere an dem Grundkörper des Verbindungsstücks, angeordnet, bevorzugt gelagert. Die Auslöseeinheit ist vorzugsweise durch einen Bediener betätigbar, beispielsweise über ein Betätigungselement der Auslöseeinheit. Das Betätigungselement kann beispielsweise als ein Schalter, als ein Drehrad, als eine Taste, als ein Hebel, als ein Touchscreen oder dergleichen ausgebildet sein.

Ferner wird vorgeschlagen, dass die Auslöseeinheit zu einem Lösen der Koppeleinheit aus dem gekoppelten Zustand durch eine Betätigung der Befestigungseinheit betätigbar ist. Vorteilhaft kann die Koppeleinheit besonders einfach betätigt werden. Vorteilhaft kann ein besonders hoher Bedienkomfort erreicht werden.

Vorteilhaft kann eine besonders zeitsparende Verbindung der Verbindungsstücke realisiert werden. Insbesondere ist die Auslöseeinheit zu einem Herstellen des gekoppelten Zustands durch eine Betätigung der Befestigungseinheit betätigbar. Insbesondere befindet sich die Koppeleinheit in einem befestigten Zustand der Befestigungseinheit im gekoppelten Zustand. Vorzugsweise befindet sich die Koppeleinheit in einem gelösten Zustand der Befestigungseinheit im entkoppelten Zustand.

Zudem wird vorgeschlagen, dass die Koppelelemente jeweils eine Kontaktfläche zu einem Zusammenwirken mit der Auslöseeinheit aufweisen, wobei die Kontaktflächen entlang einer jeweiligen Längserstreckung der Koppelelemente eine variierende Breite aufweisen. Vorteilhaft können unterschiedliche Relativpositionen der Koppeleinheit zu der Gegenkoppeleinheit besonders einfach ausgeglichen werden. Vorteilhaft kann einer übermäßigen Auslenkung der Koppelelemente in einem entkoppelten Zustand der Koppeleinheit entgegengewirkt werden. Vorteilhaft kann einer Beschädigung der Koppelelemente durch eine übermäßige Auslenkung entgegengewirkt werden.

Weiterhin wird vorgeschlagen, dass die Auslöseeinheit ein drehbares Auslöseelement zum Lösen des gekoppelten Zustands aufweist. Vorteilhaft kann eine besonders platzsparende Auslöseeinheit zur Verfügung gestellt werden. Das Auslöseelement weist beispielsweise eine Rippe auf, die dazu vorgesehen ist, mit den Koppelelementen zu einer Betätigung der Koppeleinheit zusammenzuwirken. Das Auslöseelement ist um eine Rotationsachse drehbar gelagert, insbesondere an dem Grundkörper des Verbindungsstücks. Durch die Drehung des Auslöseelements ist die Koppeleinheit betätigbar, insbesondere durch ein Erzeugen eines Zusammenwirkens der Rippe mit den Koppelelementen. Die Auslöseeinheit weist beispielsweise zumindest ein Steuerelement auf. Das Steuerelement ist insbesondere dazu vorgesehen, mit der Befestigungseinheit, insbesondere dem Befestigungselement, zu einer Betätigung der Koppeleinheit zusammenzuwirken. Das Auslöseelement und/oder das Steuerelement sind insbesondere drehbar, vorzugsweise um eine Rotationsachse, an dem Grundkörper des Verbindungsstücks angeordnet. Die Rotationsachse verläuft vorzugsweise zumindest im Wesentlichen senkrecht zu der Haupterstreckungsachse des Verbindungsstücks und/oder zu der Haupterstreckungsachse des Grundkörpers des Verbindungsstücks. Das Steuerelement ist vorzugsweise dazu vorgesehen, eine Bewegung des Befestigungselements an das Auslöseelement zu übertragen, insbesondere um die Koppeleinheit zu betätigen. Das Steuerelement weist beispielsweise einen Bolzen oder dergleichen auf. Der Bolzen ist vorzugsweise versetzt zur Rotationsachse angeordnet. Der Bolzen ist bevorzugt dazu vorgesehen, zu einer Betätigung der Koppeleinheit mit der Befestigungseinheit, insbesondere dem Befestigungselement, zusammenzuwirken. Das Befestigungselement weist bevorzugt zwei Steuerflächen auf. Die Steuerflächen sind dazu vorgesehen, mit dem Bolzen zur Erzeugung einer Drehung des Auslöseelements um die Rotationsachse zusammenzuwirken, insbesondere zur Betätigung der Koppeleinheit. Die Steuerflächen sind insbesondere einander gegenüberliegend angeordnet. Der Bolzen ist vorzugsweise zwischen den Steuerflächen angeordnet. Das Befestigungselement ist insbesondere durch eine Drehung um eine Drehachse an dem Gegenbefestigungselement befestigbar. Durch die Drehung des Befestigungselements beim Befestigen der Verbindungsstücke aneinander ist insbesondere eine Bewegung des Befestigungselements entlang der Drehachse relativ zu dem Grundkörper erzeugbar. Durch die Bewegung des Befestigungselements entlang der Drehachse ist insbesondere eine Drehung des Steuerelements erzeugbar, vorzugsweise durch ein Zusammenwirken der Steuerflächen mit dem Bolzen des Steuerelements. Die Drehachse verläuft insbesondere zumindest im Wesentlichen parallel zu der Haupterstreckungsachse des Verbindungsstücks, vorzugsweise zu der Haupterstreckungsachse des Grundkörpers des Verbindungsstücks. Das Steuerelement weist bevorzugt zwei Anschlagelemente auf. Die Anschlagelemente begrenzen vorzugsweise einen Rotationsbereich für das Steuerelement und somit insbesondere einen Rotationsbereich für das Auslöseelement. Die Auslöseeinheit weist bevorzugt ein Gegenanschlagelement auf. Das Gegenanschlagelement ist an dem Grundkörper des Verbindungsstücks angeordnet, insbesondere starr mit dem Grundkörper des Verbindungsstücks verbunden. Das Gegenanschlagelement weist vorzugsweise eine Anschlagkontur auf. Die Anschlagkontur ist insbesondere dazu vorgesehen, mit den Anschlagelementen zusammenzuwirken, insbesondere um den Rotationsbereich für das Steuerelement zu definieren.

Des Weiteren wird vorgeschlagen, dass das Auslöseelement zumindest zwei voneinander verschiedene Kontaktbereiche aufweist, an denen in Abhängigkeit von einer Breite der Kontaktflächen die Koppelelemente im gekoppelten Zustand anliegen. Vorteilhaft kann ein Auslenkungsgrad der Koppelelemente durch eine Betätigung der Koppeleinheit an unterschiedliche Relativpositionen der Koppeleinheit zu der Gegenkoppeleinheit angepasst werden. Vorteilhaft kann einer übermäßigen Auslenkung der Koppelelemente in einem entkoppelten Zustand der Koppeleinheit entgegengewirkt werden. Es kann einer Beschädigung der Koppelelemente durch eine übermäßige Auslenkung entgegengewirkt werden. In Abhängigkeit von einer relativen Position der Koppelelemente zu dem Auslöseelement, insbesondere betrachtet entlang der Haupterstreckungsachse des Verbindungsstücks, weisen vorzugsweise die Kontaktflächen im Bereich des Auslöseelements unterschiedliche Breiten auf. In Abhängigkeit von der relativen Position der Koppelelemente zu dem Auslöseelement liegen insbesondere die Kontaktflächen an unterschiedlichen Kontaktbereichen des Auslöseelements an.

Außerdem wird vorgeschlagen, dass die Auslöseeinheit zu einem Lösen des gekoppelten Zustands zumindest ein zwischen die Koppelelemente schiebbares Auslöseelement aufweist. Vorteilhaft kann eine konstruktiv einfache Auslöseeinheit realisiert werden. Insbesondere ist das Auslöseelement in einem entkoppelten Zustand der Koppeleinheit, vorzugsweise in einem ineinandergeschobenen Zustand der Verbindungsstücke, zwischen den Koppelelementen angeordnet. Insbesondere ist ein Bereich zwischen den Koppelelementen in einem gekoppelten Zustand der Koppeleinheit frei von einem zwischen den Koppelelementen angeordneten Auslöseelement. Es ist denkbar, dass das Auslöseelement drehbar oder linear an dem Verbindungsstück, insbesondere an dem Grundkörper, gelagert ist. Insbesondere ist das Auslöseelement starr mit dem Befestigungselement verbunden. Bevorzugt ist das Auslöseelement einstückig mit dem Befestigungselement ausgebildet. Alternativ ist denkbar, dass das Auslöseelement separat von der Befestigungseinheit, insbesondere von dem Befestigungselement, ausgebildet ist. Ferner ist alternativ denkbar, dass das Auslöseelement relativ zu dem Befestigungselement bewegbar ist.

Ferner wird ein, insbesondere das zuvor bereits genannte, Verlängerungsstück mit der Verbindungsvorrichtung vorgeschlagen. Es kann vorteilhaft ein Verlängerungsstück mit einer besonders langlebigen und/oder zuverlässigen Kopplungseinheit zur Verfügung gestellt werden.

Zudem wird ein, insbesondere der zuvor bereits genannte, Werkzeugaufsatz mit der, insbesondere einer weiteren, Verbindungsvorrichtung vorgeschlagen. Es kann vorteilhaft ein Werkzeugaufsatz mit einer besonders langlebigen und/oder zuverlässigen Kopplungseinheit zur Verfügung gestellt werden.

Weiterhin wird ein Werkzeugsystem, insbesondere ein Werkzeugmaschinensystem mit der Verbindungsvorrichtung und mit dem weiteren Verbindungsstück vorgeschlagen. Es kann ein Werkzeugsystem mit einer besonders zuverlässigen und/oder langlebigen Kopplung des Verbindungsstücks mit dem weiteren Verbindungsstück bereitgestellt werden. Es ist denkbar, dass das Werkzeugsystem das Werkzeug, das Verlängerungsstück und/oder den Werkzeugaufsatz aufweist.

Des Weiteren wird vorgeschlagen, dass das Verbindungsstück und das weitere Verbindungsstück in zumindest zwei unterschiedlichen Ausrichtungen relativ zueinander koppelbar sind. Vorteilhaft können die Verbindungsstücke besonders flexibel verbunden werden. Die zwei Ausrichtungen sind vorzugsweise zumindest im Wesentlichen um 180° zueinander gedreht, insbesondere um die jeweilige Haupterstreckungsachse der Verbindungsstücke.

Die erfindungsgemäße Verbindungsvorrichtung, das erfindungsgemäße Verlängerungsstück, der erfindungsgemäße Werkzeugaufsatz und/oder das erfindungsgemäße Werkzeugsystem sollen/soll hierbei nicht auf die oben beschriebene Anwendung und Ausführungsform beschränkt sein. Insbesondere können/kann die erfindungsgemäße Verbindungsvorrichtung, das erfindungsgemäße Verlängerungsstück, der erfindungsgemäße Werkzeugaufsatz und/oder das erfindungsgemäße Werkzeugsystem zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: ein Werkzeug mit einem erfindungsgemäßen Werkzeugaufsatz in einem miteinander verbundenen Zustand in einer Seitenansicht,
- Fig. 1b: das Werkzeug, den Werkzeugaufsatz und ein erfindungsgemäßes Verlängerungsstück in einem voneinander getrennten Zustand in einer Seitenansicht,
- Fig. 1c: das Werkzeug, den Werkzeugaufsatz und das Verlängerungsstück in einem miteinander verbundenen Zustand in einer Seitenansicht,
- Fig. 2: den Werkzeugaufsatz mit einer erfindungsgemäßen Verbindungsvorrichtung und mit einem weiteren Verbindungsstück in einer Querschnittsdarstellung,
- Fig. 3a: einen Teil der Verbindungsvorrichtung mit einem Verbindungsstück und dem weiteren Verbindungsstück in einem aneinander befestigten Zustand der Verbindungsstücke in einer Querschnittsdarstellung,
- Fig. 3b: einen Teil der Verbindungsvorrichtung und dem weiteren Verbindungsstück in einem aneinander unbefestigten Zustand der Verbindungsstücke in einer Querschnittsdarstellung,
- Fig. 4: einen Teil einer Koppeleinheit des Verbindungsstücks und einer Gegenkoppeleinheit des weiteren Verbindungsstücks in einem gekoppelten Zustand,
- Fig. 5: einen Teil der Verbindungsvorrichtung und dem weiteren Verbindungsstück in einem aneinander befestigten Zustand in einer weiteren Querschnittsdarstellung,
- Fig. 6a: eine Auslöseeinheit der Verbindungsvorrichtung in einem gekoppelten Zustand der Koppeleinheit in einer Querschnittsdarstellung,
- Fig. 6b: die Auslöseeinheit der Verbindungsvorrichtung in einem gelösten Zustand der Koppeleinheit in der Querschnittsdarstellung aus Figur 6a,
- Fig. 7: einen Teil der Auslöseeinheit in einem aneinander befestigt Zustand der Verbindungsstücke,
- Fig. 8: den Teil der Auslöseeinheit in einem aneinander unbefestigten Zustand der Verbindungsstücke in der Querschnittsdarstellung aus Figur 7,
- Fig. 9: eine erfindungsgemäße Verbindungsvorrichtung mit einem Verbindungsstück und ein weiteres Verbindungsstück in einer ersten alternativen Ausführung in einer Querschnittsdarstellung,
- Fig. 10: die Verbindungsvorrichtung aus Figur 9 in einer weiteren Querschnittsdarstellung,
- Fig. 11: eine erfindungsgemäße Verbindungsvorrichtung mit einem Verbindungsstück und ein weiteres Verbindungsstück in einer zweiten alternativen Ausführung in einer Querschnittsdarstellung,
- Fig. 12: eine erfindungsgemäße Verbindungsvorrichtung mit einem Verbindungsstück und ein weiteres Verbindungsstück in einer dritten alternativen Ausführung in einer Querschnittsdarstellung, und
- Fig. 13: einen Teil eines Koppelelements einer Koppeleinheit der Verbindungsvorrichtung aus Figur 12 in einer perspektivischen Darstellung.

### Beschreibung der Ausführungsbeispiele

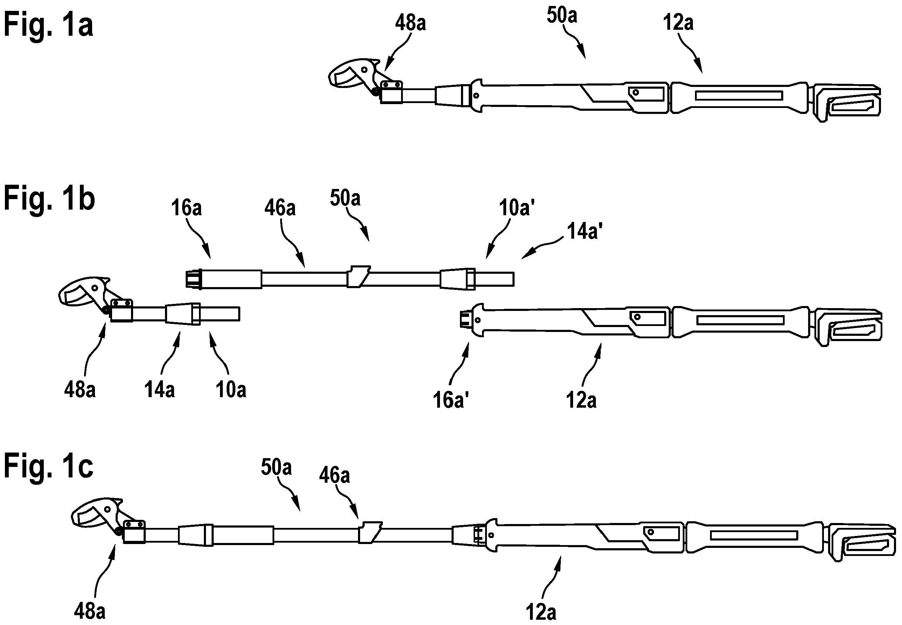

Figur 1a zeigt ein Werkzeugsystem 50a mit einem Werkzeug 12a und einem Werkzeugaufsatz 48a. Der Werkzeugaufsatz 48a ist an dem Werkzeug 12a befestigt. Das Werkzeugsystem 50a weist ein Verlängerungsstück 46a auf. Figur 1b zeigt das Werkzeugsystem 50a, wobei das Verlängerungsstück 46a, der Werkzeugaufsatz 48a und das Werkzeug 12a voneinander getrennt sind. In Figur 1c ist das Verlängerungsstück 46a zwischen dem Werkzeugaufsatz 48a und dem Werkzeug 12a montiert.

Das Werkzeug 12a ist als ein stabgebundenes Gartenwerkzeug ausgebildet. Das Werkzeug 12a ist als eine Baumschere, insbesondere als eine Stab-Gartenschere, als eine Stab-Astschere oder dergleichen ausgebildet. Alternativ ist denkbar, dass das Werkzeug als ein Hochentaster, als eine Stab-Kettensäge oder als ein anderes, einem Fachmann als sinnvoll erscheinendes Werkzeug ausgebildet ist. Das Werkzeug 12a ist zu einer Durchführung von Arbeiten, insbesondere von Schneidarbeiten, in höhergelegenen Bereichen als einer Körpergröße eines durchschnittlichen Benutzers des Werkzeugs 12a vorgesehen. Das Werkzeug 12a ist dazu vorgesehen, Äste von Bäumen, Hecken o. dgl. zu schneiden, zu sägen und/oder zu trimmen.

Das Werkzeug 12a ist als eine Werkzeugmaschine, insbesondere als Handwerkzeugmaschine, ausgebildet. Die Werkzeugmaschine 12a weist insbesondere eine Antriebseinheit (hier nicht dargestellt), beispielsweise einen Elektromotor, einen Verbrennungsmotor oder dergleichen auf. Das Werkzeug 12a ist als akkubetriebenes Werkzeug ausgebildet. Alternativ ist denkbar, dass das Werkzeug 12a als ein netzbetriebenes Werkzeug ausgebildet ist. Ferner ist alternativ denkbar, dass das Werkzeug 12a als ein handgetriebenes Werkzeug ausgebildet ist.

Die Antriebseinheit ist insbesondere zu einem Antrieb eines Einsatzwerkzeugs 32a vorgesehen. Das Einsatzwerkzeug 32a ist als eine Schere ausgebildet. Alternativ ist auch denkbar, dass das Einsatzwerkzeug 32a als ein Sägeblatt oder dergleichen ausgebildet ist. Das Einsatzwerkzeug 32a ist Teil des Werkzeugaufsatzes 48a.

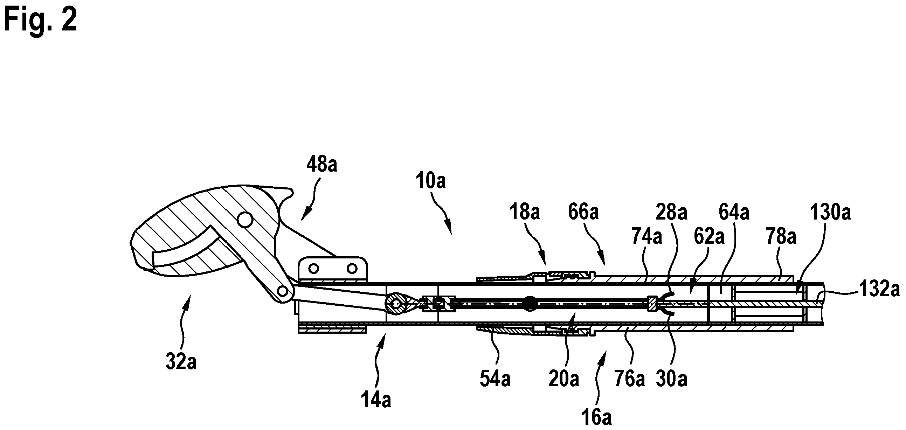

Der Werkzeugaufsatz 48a weist eine Verbindungsvorrichtung 10a auf (vgl. Figur 2). Die Verbindungsvorrichtung 10a weist zumindest ein Verbindungsstück 14a zur Verbindung mit einem von zwei weiteren Verbindungsstücken 16a, 16a` auf. Ein erstes weiteres Verbindungsstück 16a der zwei weiteren Verbindungsstücke 16a, 16a` ist Teil des Verlängerungsstücks 46a. Ein zweites weiteres Verbindungsstück 16a` der zwei weiteren Verbindungsstücke 16a, 16a` ist Teil des Werkzeugs 12a. Es ist auch denkbar, dass das Werkzeugsystem 50a lediglich die Verbindungsvorrichtung 10a und das weitere Verbindungsstück 16a aufweist.

Die Verbindungsvorrichtung 10a ist dazu vorgesehen, den Werkzeugaufsatz 48a an dem Verlängerungsstück 46a oder an dem Werkzeug 12a zu befestigen. Die Verbindungsvorrichtung 10a ist dazu vorgesehen, den Werkzeugaufsatz 48a an dem Verlängerungsstück 46a oder an dem Werkzeug 12a zu befestigen und zu einer Übertragung einer Antriebskraft miteinander zu verbinden. Im Folgenden wird die Verbindung des Werkzeugaufsatzes 48a, insbesondere der Verbindungsvorrichtung 10a, mit dem Verlängerungsstück 46a, insbesondere dem ersten weiteren Verbindungsstück 16a, beschrieben, wobei die Beschreibung analog auf eine Verbindung des Werkzeugaufsatzes 48a, insbesondere der Verbindungsvorrichtung 10a, mit dem Werkzeug 12a, insbesondere dem zweiten weiteren Verbindungsstück 16a`, zu lesen ist.

Das Verbindungsstück 14a und das weitere Verbindungsstück 16a sind in zumindest zwei unterschiedlichen Ausrichtungen relativ zueinander koppelbar. Die zwei Ausrichtungen sind zumindest im Wesentlichen um 180° zueinander gedreht, insbesondere um eine jeweilige Haupterstreckungsachse 52a der Verbindungsstücke 14a, 16a. Das weitere Verbindungsstück 16a ist über eine Bewegung entlang einer zumindest im Wesentlichen geradlinigen Verbindungsachse 60a mit dem Verbindungsstück 14a verbindbar. Die Verbindungsstücke 14a, 16a sind entlang der Verbindungsachse 60a ineinanderschiebbar, vorzugsweise zur Befestigung der Verbindungsstücke 14a, 16a aneinander mittels einer Befestigungseinheit 18a.

Die Verbindungsvorrichtung 10a weist die Befestigungseinheit 18a zur Befestigung der Verbindungstücke 14a, 16a aneinander auf. Die Befestigungseinheit 18a ist spannzangenartig ausgebildet. Die Befestigungseinheit 18a weist ein Befestigungselement 54a auf. Das Befestigungselement 54a ist als eine Drehhülse ausgebildet. Alternativ ist auch denkbar, dass das Befestigungselement 54a als ein Rasthaken, als eine Rastausnehmung oder dergleichen ausgebildet ist. Das Befestigungselement 54a weist ein Gewinde, insbesondere ein Innengewinde 80a, auf.

Die Verbindungsvorrichtung 10a weist eine Koppeleinheit 20a auf. Die Koppeleinheit 20a ist in einem gekoppelten Zustand dazu vorgesehen, eine Antriebskraft, insbesondere eine Zug- und/oder Druckkraft, zwischen den Verbindungsstücken 14a, 16a, insbesondere von dem weiteren Verbindungsstück 16a an das Verbindungsstück 14a zu übertragen.

Die Koppeleinheit 20a weist zwei Koppelelemente 28a, 30a auf. Es ist jedoch alternativ auch denkbar, dass die Koppeleinheit 20a lediglich ein Koppelelement 28a, 30a oder mehr als zwei Koppelelemente 28a, 30a aufweist. Die zwei Koppelelemente 28a, 30a sind voneinander beabstandet angeordnet. Die Koppeleinheit 20a weist zwei einander gegenüberliegende Koppelstellen 22a, 24a zur Kopplung mit einer Gegenkoppeleinheit 26a des weiteren Verbindungsstücks 16a auf. An den Koppelelementen 28a, 30a ist jeweils eine der Koppelstellen 22a, 24a angeordnet. Die Koppelstellen 22a, 24a sind bezüglich der Haupterstreckungsachse 52a des Verbindungsstücks 14a gegenüberliegend angeordnet. Die Koppelstellen 22a, 24a sind symmetrisch zu der Haupterstreckungsachse 52a des Verbindungsstücks 14a angeordnet.

Es ist denkbar, dass der Werkzeugaufsatz 48a ein elastisches Element, beispielsweise ein Federelement, ein Elastomer oder dergleichen aufweist, um das Einsatzwerkzeug 32a bezüglich eines Öffnungswinkels mit einer Kraft zu beaufschlagen, insbesondere um eine vorteilhaft zuverlässige Kopplung zwischen der Kopplungseinheit 20a und der Gegenkopplungseinheit 26a zu gewährleisten.

Das Verbindungsstück 14a weist eine Kopplungsführung (hier nicht dargestellt) zur Führung der Koppelelemente 28a, 30 im Grundkörper 58a auf. Das elastische Element kann beispielsweise an der Kopplungsführung angeordnet sein oder in das Einsatzwerkzeug 32a integriert sein.

Die Koppelelemente 28a, 30a sind gabelartig ausgebildet. Die Koppelelemente 28a, 30a sind als Streben ausgebildet. Die Koppelelemente 28a, 30a sind an einem Ende 86a an dem Verbindungsstück 14a befestigt. Die Koppelelemente 28a, 30a weisen jeweils ein freies Ende 88a auf. Die freien Enden 88a sind auf einer zur dem Ende 86a abgewandten Seite der Koppelelemente 28a, 30a angeordnet. Die Koppelelemente 22a, 24a sind an den freien Enden 88a trichterförmig ausgebildet. Die trichterförmige Ausgestaltung der freien Enden 88a der Koppelelemente 28a, 30a ist zur Führung eines Gegenkoppelelements 62a der Gegenkoppeleinheit 26a beim Ineinanderschieben der Verbindungsstücke 14a, 16a vorgesehen.

Das Verbindungsstück 14a weist einen Grundkörper 58a auf. Die Koppelelemente 28a, 30a sind an, insbesondere in, dem Grundkörper 58a des Verbindungsstücks 14a angeordnet, insbesondere relativ zu dem Grundkörper 58a bewegbar. Die Koppelelemente 28a, 30a sind zumindest größtenteils in dem Grundkörper 58a des Verbindungsstücks 14a angeordnet. Eine Haupterstreckungsachse 56a des Grundkörpers 58a des Verbindungsstücks 14a entspricht der Haupterstreckungsachse 52a des Verbindungsstücks 52a. Alternativ istjedoch auch denkbar, dass die Haupterstreckungsachse 56a des Grundkörpers 58a des Verbindungsstücks 14a verschieden ist von der Haupterstreckungsachse 52a des Verbindungsstücks 14a. Die Verbindungsachse 60a entspricht der Haupterstreckungsachse 52a des Verbindungsstücks 14a und der Haupterstreckungsachse 56a des Grundkörpers 58a des Verbindungsstücks 14a.

Die Koppelelemente 28a, 30a sind zumindest in einem Betriebszustand, insbesondere in einem gekoppelten Zustand der Koppeleinheit 20a, zumindest im Wesentlichen parallel zur Verbindungsachse 60a geführt.

Das weitere Verbindungsstück 16a weist zumindest einen Grundkörper 64a. Das Gegenkoppelelement 62a ist an, insbesondere zumindest teilweise in dem Grundkörper 64a des weiteren Verbindungsstücks 16a angeordnet, insbesondere relativ zu dem Grundkörper 64a des weiteren Verbindungsstücks 16a bewegbar. Das Gegenkoppelelement 62a ist zumindest im Wesentlichen parallel zur Verbindungsachse 60a geführt.

Das weitere Verbindungsstück 16a weist eine Gegenbefestigungseinheit 66a zur Befestigung der Verbindungsstücke 14a, 16a aneinander auf. Die Gegenbefestigungseinheit 66a ist dazu vorgesehen, zur Befestigung der Verbindungsstücke 14a, 16a aneinander mit der Befestigungseinheit 18a zusammenzuwirken. Das Befestigungselement 54a ist dazu vorgesehen, mit der Gegenbefestigungseinheit 66a zu einer Befestigung der Verbindungsstücke 14a, 16a aneinander zusammenzuwirken. Das Befestigungselement 54a ist an dem Grundkörper 58a des Verbindungsstücks 14a angeordnet.

Die Gegenbefestigungseinheit 66a weist zumindest ein Gegenbefestigungselement 68a auf. Das Gegenbefestigungselement 68a ist dazu vorgesehen, mit der Befestigungseinheit 18a, insbesondere dem Befestigungselement 54a zu einer Befestigung der Verbindungsstücke 14a, 16a aneinander zusammenzuwirken. Das Gegenbefestigungselement 68a ist an dem weiteren Verbindungsstück 16a, vorzugsweise an dem Grundkörper 64a des weiteren Verbindungsstücks 16a, angeordnet.

Die Befestigungseinheit 18a weist eine Klemmrampe 70a auf. Die Gegenbefestigungseinheit 66a weist eine Klemmrampe 72a auf. Alternativ ist denkbar, dass lediglich die Befestigungseinheit 18a eine Klemmrampe 70a oder lediglich die Gegenbefestigungseinheit 66a eine Klemmrampe 72a aufweist. Die Klemmrampe 70a der Befestigungseinheit 18a ist dazu vorgesehen, zu einer Befestigung der Verbindungsstücke 14a, 16a aneinander mit der Klemmrampe 72a der Gegenbefestigungseinheit 66a zusammenzuwirken. Durch die Befestigungseinheit 18a und/oder die Gegenbefestigungseinheit 66a sind die Verbindungsstücke 14a, 16a rotatorisch und/oder translatorisch, insbesondere in axialer Richtung, relativ zueinander fixierbar, bevorzugt zumindest die Grundkörper 58a, 64a der Verbindungsstücke 14a, 16a.

Die Koppeleinheit 20a ist dazu vorgesehen, bei einer Befestigung der Verbindungsstücke 14a, 16a aneinander mittels der Befestigungseinheit 18a im Wesentlichen selbständig in den gekoppelten Zustand überzugehen.

Die Verbindungsvorrichtung 10a, insbesondere das Verbindungsstück 14a, weist zumindest ein Führungselement 74a auf. Das Führungselement 74a ist dazu vorgesehen, das Verbindungsstück 14a und das weitere Verbindungsstück 16a bei dem Ineinanderschieben zu führen. Das Führungselement 74a ist hier beispielhaft durch den Grundkörper 58a gebildet. Alternativ ist jedoch auch denkbar, dass das Führungselement 74a separat von dem Grundkörper 58a ausgebildet ist.

Das weitere Verbindungsstück 16a weist zumindest ein Gegenführungselement 76a auf. Das Gegenführungselement 76a ist dazu vorgesehen, das Verbindungsstück 14a und das weitere Verbindungsstück 16a bei dem Ineinanderschieben zu führen. Das Führungselement 74a ist dazu vorgesehen, zu einer Führung der Verbindungsstücke 14a, 16a bei dem Ineinanderschieben mit dem Gegenführungselement 76a zusammenzuwirken. Das Führungselement 74a und/oder das Gegenführungselement 76a sind/ist dazu vorgesehen, zum Ineinanderschieben des Verbindungsstücks 14a und des weiteren Verbindungsstücks 16a eine Ausrichtung des Verbindungsstücks 14a und des weiteren Verbindungsstücks 16a, insbesondere um eine zumindest im Wesentlichen parallel zur Verbindungsachse 60a ausgerichtete Achse, relativ zueinander vorzugeben. Das Führungselement 74a ist durch eine Außenwandung des Grundkörpers 58a gebildet. Das Führungselement 76a ist durch eine Innenwandung einer Hülse 78a der Gegenbefestigungseinheit 66a gebildet.

Das Befestigungselement 54a ist drehbar an dem Grundkörper 58a gelagert, insbesondere um eine Drehachse 110a. Das Befestigungselement 54a ist in Richtung der Haupterstreckungsachse 52a relativ zu dem Grundkörper 58a verschiebbar angeordnet. Das Gegenbefestigungselement 68a weist ein Gewinde, insbesondere ein Außengewinde 82a, auf. Durch ein Zusammenwirken des Innengewindes 80a mit dem Außengewinde 82a der Befestigungseinheit 18a sind die Verbindungsstücke 14a, 16a aneinander befestigbar. Das Innengewinde 82a ist an der Hülse 78a angeordnet. Die Hülse 78a ist starr mit dem Grundkörper 64a verbunden. Es ist auch denkbar, dass die Hülse 78a einstückig mit dem Grundkörper 64a des weiteren Verbindungsstücks 16a ausgebildet ist.

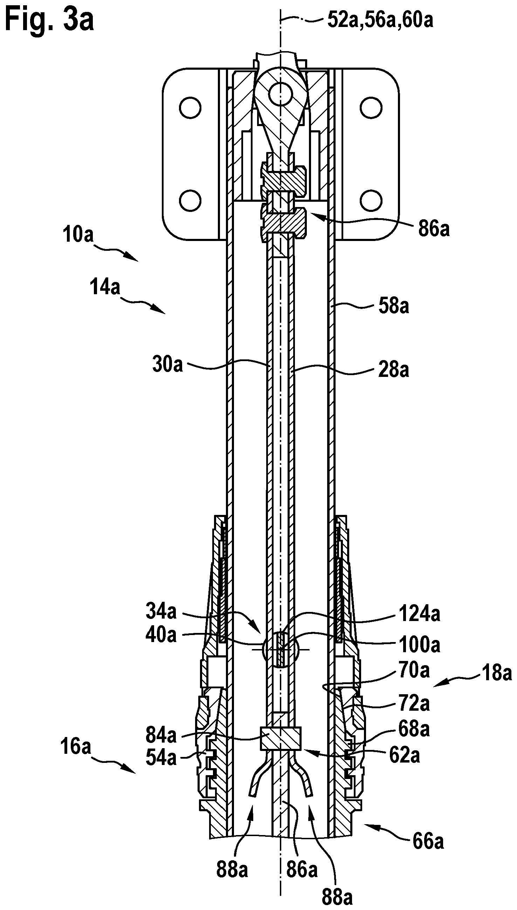

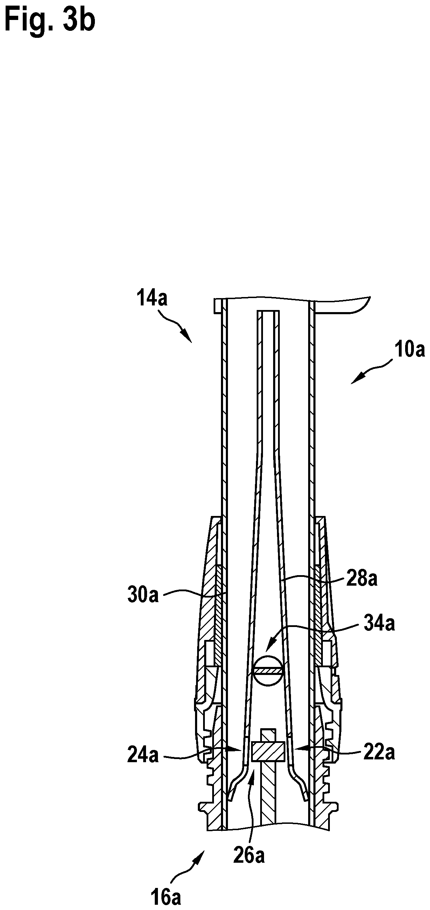

Durch ein Aufschrauben des Verbindungsstücks 14a auf das weitere Verbindungsstück 16a mittels der Befestigungseinheit 18a und der Gegenbefestigungseinheit 66a, vorzugsweise über das Innengewinde 80a und das Außengewinde 82a, ist ein Zusammenwirken der Klemmrampe 70a der Befestigungseinheit 18a mit der Klemmrampe 72a der Gegenbefestigungseinheit 66a erzeugbar. Figur 3a zeigt die Verbindungsstücke 14a, 16a in einem aneinander befestigten Zustand in einer Querschnittsdarstellung. Figur 3b zeigt die Verbindungsstücke 14a, 16a in einem aneinander unbefestigten Zustand der Verbindungsstücke 14a, 16a.

Das Gegenkoppelelement 62a weist einen Bolzen 84a auf. Das Gegenkoppelelement 62a weist eine Strebe 132a auf. Der Bolzen 84a ist an der Strebe 132a angeordnet. Es ist denkbar, dass der Bolzen 84a einstückig mit der Strebe 132a oder separat von der Strebe 132a ausgebildet ist. Der Bolzen 84a ist dazu vorgesehen, mit den Koppelstellen 22a, 24a zur Herstellung des gekoppelten Zustands zusammenzuwirken. Das weitere Verbindungsstück 16a weist eine Strebenführung 130a zur Führung des Gegenkoppelelements 62a, insbesondere der Strebe 132a, auf. Die Strebenführung 130a ist in dem Grundkörper 64a des weiteren Verbindungsstücks 16a angeordnet.

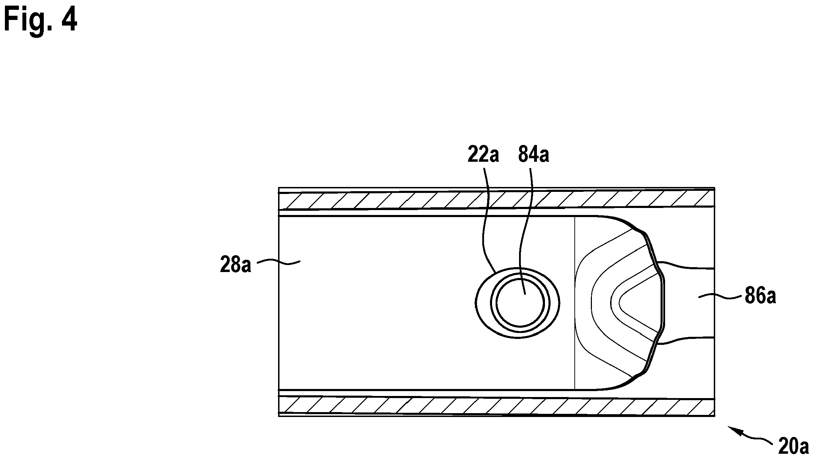

Die Koppelstellen 22a, 24a sind hier beispielhaft als, insbesondere einander gegenüberliegende, Ausnehmungen in den Koppelelementen 28a, 30a ausgebildet. Im gekoppelten Zustand ist der Bolzen 84a in den als Ausnehmungen ausgebildeten Koppelstellen 22a, 24a angeordnet (vgl. Figur 4).

Die als Ausnehmungen ausgebildeten Koppelstellen 22a, 24a weisen eine ovale Form auf. Alternativ sind jedoch andere, einem Fachmann als sinnvoll erscheinende Formen für die als Ausnehmungen ausgebildeten Koppelstellen 22a, 24a denkbar. Ferner ist alternativ denkbar, dass die Koppelstellen 22a, 24a jeweils durch Rastnasen, Rasthaken oder dergleichen ausgebildet sind und das Gegenkoppelelement 62a zumindest eine Ausnehmung oder dergleichen aufweist.

Die Koppelelemente 28a, 30a sind aus einem federelastischen Material gebildet. Die Koppelelemente 28a, 30a sind in einer Übertragungsrichtung der Antriebskraft steif ausgebildet. Die Übertragungsrichtung der Antriebskraft verläuft insbesondere zumindest im Wesentlichen parallel zur Haupterstreckungsachse 52a des Verbindungsstücks 14a und/oder zu einer Haupterstreckungsachse des weiteren Verbindungsstücks 16a, welche insbesondere im aneinander befestigten Zustand der Verbindungsstücke 14a, 16a der Haupterstreckungsachse 52a des Verbindungsstücks 14a entspricht. Die Koppelelemente 28a, 30a sind zu einer, vorzugsweise elastischen, Auslenkung in einer zur Übertragungsrichtung und/oder zur Haupterstreckungsachse 56a des Grundkörpers 58a und/oder einer jeweiligen Haupterstreckungsachse (hier nicht dargestellt) der Koppelelemente 28a, 30a zumindest im Wesentlichen senkrechten verlaufenden Richtung vorgesehen. Die Koppelelemente 28a, 30a sind, insbesondere in Übertragungsrichtung der Antriebskraft, druck- und/oder zugbeständig ausgebildet. Die Koppelelemente 28a, 30a sind beispielsweise aus einem Metall, insbesondere aus Federstahl oder dergleichen, aus einem elastischen Kunststoff oder einem anderen, einem Fachmann als sinnvoll erscheinenden federelastischen Material gebildet.

Die Verbindungsvorrichtung 10a weist eine Auslöseeinheit 34a zum Lösen des gekoppelten Zustands auf. Die Auslöseeinheit 34a ist dazu vorgesehen, bei deren Betätigung die zwei Koppelstellen 22a, 24a auseinander zu bewegen, insbesondere um die Kopplung mit der Gegenkoppeleinheit 26a zu lösen. Die Auslöseeinheit 34a ist dazu vorgesehen, die zwei Koppelelemente 28a, 30a zum Lösen des gekoppelten Zustands auseinander zu bewegen (vgl. Figur 3b). Die Auslöseeinheit 34a ist zum Lösen des gekoppelten Zustands dazu vorgesehen, die zwei Koppelelemente 28a, 30a, insbesondere die Koppelstellen 22a, 24a, von der Gegenkoppeleinheit 26a, insbesondere dem Gegenkoppelelement 62a, zu beabstanden.

Durch eine Betätigung der Auslöseeinheit 34a in einem entkoppelten Zustand der Koppeleinheit 20a ist der gekoppelte Zustand herstellbar (vgl. Figur 3a). Die Auslöseeinheit 34a ist als mechanische Auslöseeinheit ausgebildet. Die Auslöseeinheit 34a ist mechanisch betätigbar. Zusätzlich ist jedoch auch denkbar, dass die Auslöseeinheit 34a elektronisch steuerbar ist.

Die Auslöseeinheit 34a weist zumindest ein drehbares Auslöseelement 40a zum Lösen des gekoppelten Zustands auf. Das Auslöseelement 40a ist dazu vorgesehen, zum Herstellen und/oder Lösen des gekoppelten Zustands mit den Koppelelementen 28a, 30a zusammenzuwirken. Das Auslöseelement 40a ist an dem Verbindungsstück 14a, insbesondere an dem Grundkörper 58a des Verbindungsstücks 14a, angeordnet, bevorzugt gelagert.

Die Auslöseeinheit 34a ist zu einem Lösen der Koppeleinheit 20a aus dem gekoppelten Zustand durch eine Betätigung der Befestigungseinheit 18a betätigbar. Die Auslöseeinheit 34a ist zu einem Herstellen des gekoppelten Zustands durch eine Betätigung der Befestigungseinheit 18a betätigbar. Die Koppeleinheit 20a befindet sich in einem befestigten Zustand der Befestigungseinheit 18a im gekoppelten Zustand. Die Koppeleinheit 20a befindet sich in einem gelösten Zustand der Befestigungseinheit 18a im entkoppelten Zustand.

Das Auslöseelement 40a weist eine Rippe 124a auf, die dazu vorgesehen ist, mit den Koppelelementen 28a, 30a zu einer Betätigung der Koppeleinheit 20a zusammenzuwirken. Das Auslöseelement 40a ist um eine Rotationsachse 100a drehbar gelagert, insbesondere an dem Grundkörper 58a. Durch die Drehung des Auslöseelements 40a ist die Koppeleinheit 20a betätigbar, insbesondere durch ein Erzeugen eines Zusammenwirkens der Rippe 124a mit den Koppelelementen 28a, 30a.

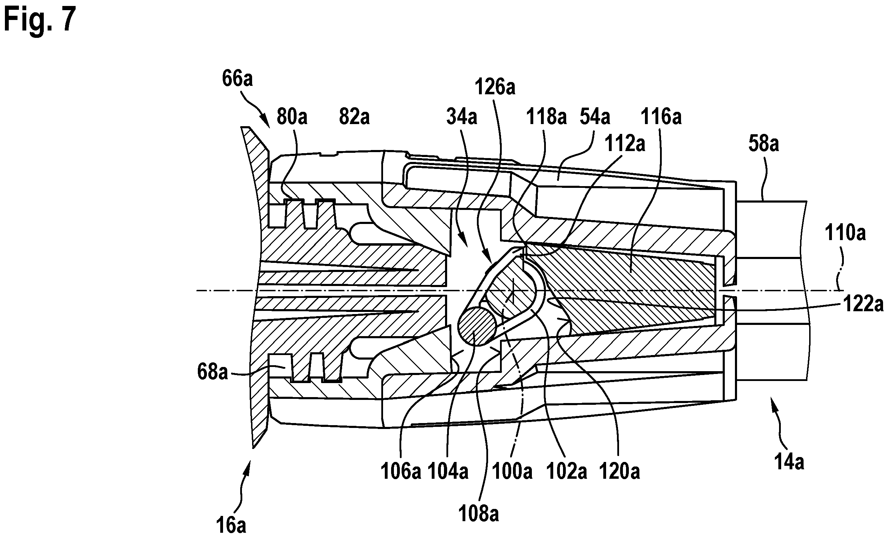

Die Auslöseeinheit 34a weist zumindest ein Steuerelement 102a auf (vgl. Figur 7). Das Steuerelement 102a ist dazu vorgesehen, mit der Befestigungseinheit 18a, insbesondere dem Befestigungselement 54a, zu einer Betätigung der Koppeleinheit 20a zusammenzuwirken.

Das Steuerelement 102a ist starr mit dem Auslöseelement 40a verbunden. Das Steuerelement 102a ist auf einer Außenseite des Grundkörpers 58a angeordnet. Das Steuerelement 102a ist zwischen Befestigungselement 102a und Grundkörper 58a angeordnet. Der Grundkörper 58a weist eine Ausnehmung 126a auf. Das Auslöseelement 40a und/oder das Steuerelement 102a sind über die Ausnehmung 126a miteinander verbunden. Das Auslöseelement 40a und/oder das Steuerelement 102a sind drehbar, insbesondere um die Rotationsachse 100a, an dem Grundkörper 58a, insbesondere an der Ausnehmung 126a, angeordnet. Die Rotationsachse 100a verläuft zumindest im Wesentlichen senkrecht zu der Haupterstreckungsachse 52a des Verbindungsstücks 14a und/oder zu der Haupterstreckungsachse 56a des Grundkörpers 58a.

Das Steuerelement 102a ist dazu vorgesehen, eine Bewegung des Befestigungselements 54a an das Auslöseelement 104a zu übertragen, insbesondere um die Koppeleinheit 20a zu betätigen. Figur 7 zeigt die Verbindungsvorrichtung 10a in einem gekoppelten Zustand.

Das Steuerelement 102a weist einen Bolzen 104a auf. Der Bolzen 104a ist versetzt zur Rotationsachse 100a angeordnet. Der Bolzen 104a ist dazu vorgesehen, zu einer Betätigung der Koppeleinheit 20a mit der Befestigungseinheit 18a, insbesondere dem Befestigungselement 54a zusammenzuwirken.

Das Befestigungselement 54a weist zwei Steuerflächen 106a, 108a auf. Die Steuerflächen 106a, 108a sind dazu vorgesehen, mit dem Bolzen 104a zur Erzeugung einer Drehung des Auslöseelements 40a um die Rotationsachse 100a zu erzeugen, insbesondere zur Betätigung der Koppeleinheit 20a. Die Steuerflächen 106a, 108a sind einander gegenüberliegend angeordnet. Der Bolzen 104a ist zwischen den Steuerflächen 106a, 108a angeordnet.

Ein Ineinanderschieben der Verbindungsstücke 14a, 16a erzeugt eine Bewegung des Befestigungselements 54a entlang der Drehachse 110a, insbesondere entlang der Haupterstreckungsachse 52a des Verbindungsstücks 14a, vorzugsweise relativ zu dem Auslöseelement 40a. Das Ineinanderschieben der Verbindungsstücke 14a, 16a, insbesondere die dadurch erzeugte Bewegung des Befestigungselements 54a entlang der Drehachse 110a, erzeugt eine Drehung des Auslöseelements 40a um die Rotationsachse 100a, insbesondere zum Erzeugen eines Auseinanderbewegens der Koppelstellen 22a, 24a, bevorzugt der Koppelelemente 28a, 30a, insbesondere zum Erzeugen des entkoppelten Zustands der Koppeleinheit 20a.

Das Befestigungselement 54a ist durch eine Drehung um die Drehachse 110a an dem Gegenbefestigungselement 68a befestigbar. Die Drehachse 110a verläuft zumindest im Wesentlichen parallel zu der Haupterstreckungsachse 52a des Verbindungsstücks 14a, vorzugsweise zu der Haupterstreckungsachse 56a des Grundkörpers 58a des Verbindungsstücks 14a. Durch die Drehung des Befestigungselements 54a beim Befestigen der Verbindungsstücke 14a, 16a aneinander ist eine Bewegung des Befestigungselements 54a entlang der Drehachse 110a relativ zu dem Grundkörper 54a, insbesondere zu dem Auslöseelement 40a, erzeugbar. Durch die Bewegung des Befestigungselements 54a entlang der Drehachse 110a, insbesondere relativ zu dem Auslöseelement 40a, ist eine Drehung des Steuerelements 102a erzeugbar, insbesondere durch ein Zusammenwirken der Steuerflächen 106a, 108a mit dem Bolzen 104a des Steuerelements 102a.

Das Auslöseelement 40a ist durch ein Aufschrauben des Befestigungselements 54a auf das Gegenbefestigungselement 68a derart gedreht, dass sich die Koppelelemente 28a, 30a, insbesondere aufgrund ihrer federelastischen Eigenschaften, aufeinander zu bewegen können, vorzugsweise um den gekoppelten Zustand der Koppeleinheit 20a herzustellen.

Ein Abschrauben des Befestigungselements 54a von der Gegenbefestigungseinheit 62a erzeugt eine Relativbewegung des Befestigungselements 54a zu dem Auslöseelement 40a, insbesondere derart, dass das Auslöseelement 40a, vorzugsweise mittels der Rippe 124a, die Koppelstellen 22a, 24, bevorzugt die Koppelelemente 28a, 30a, auseinander bewegt.

Das Steuerelement 102a weist zwei Anschlagelemente 112a, 114a auf. Die Anschlagelemente 112a, 114a begrenzen einen Rotationsbereich für das Steuerelement 102a und somit insbesondere einen Rotationsbereich für das Auslöseelement 40a.

Die Auslöseeinheit 34a weist ein Gegenanschlagelement 116a auf. Das Gegenanschlagelement 116a ist an dem Grundkörper 58a angeordnet, insbesondere starr mit dem Grundkörper 58a verbunden. Das Gegenanschlagelement 116a ist zwischen dem Befestigungselement 54a und dem Grundkörper 58a angeordnet. Das Gegenanschlagelement 116a ist auf der Außenseite des Grundkörpers 58a angeordnet.

Das Gegenanschlagelement 116a weist eine Anschlagkontur 122a auf. Die Anschlagkontur 122a ist dazu vorgesehen, mit den Anschlagelementen 112a, 114a zusammenzuwirken, insbesondere um den Rotationsbereich für das Steuerelement 102a zu definieren. Die Anschlagkontur 122a weist eine Anschlagfläche 118a auf, welche dazu vorgesehen ist, mit dem Anschlagelement 112a zusammenzuwirken, um eine Begrenzung des Rotationsbereichs für das Steuerelement 102a in einer Rotationsrichtung zu begrenzen. Die Anschlagkontur 122a weist eine weitere Anschlagfläche 120a auf, welche dazu vorgesehen ist, mit dem Anschlagelement 114a zusammenzuwirken, um eine Begrenzung des Rotationsbereichs für das Steuerelement 102a in einer zu der Rotationsrichtung entgegengesetzten weiteren Rotationsrichtung zu begrenzen. Das Anschlagelement 112a ist hier beispielhaft durch eine Nase an dem Steuerelement 102a gebildet. Das Anschlagelement 114a ist hier beispielhaft durch den Bolzen 104a gebildet.

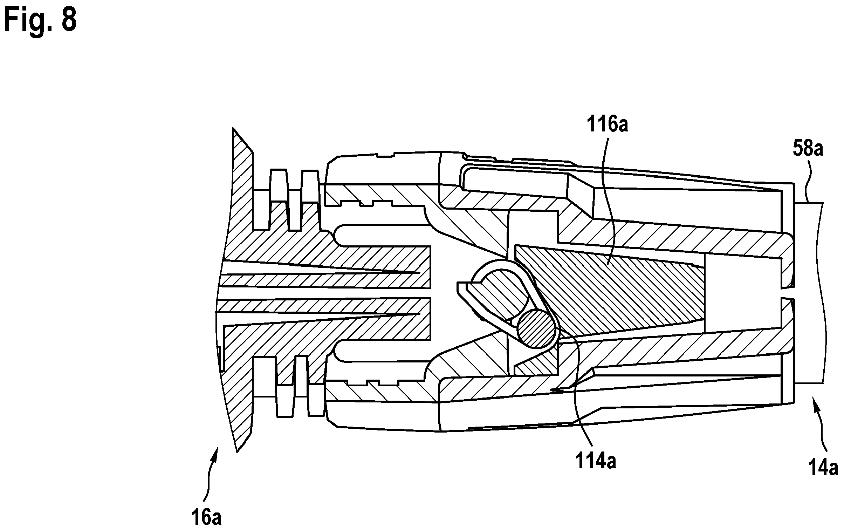

Figur 7 zeigt die Verbindungsstücke 14a, 16a in einem aneinander befestigten Zustand. Eine Position des Steuerelements 102a in Figur 7 entspricht dem gekoppelten Zustand der Koppeleinheit 20a. Figur 8 zeigt die Verbindungsstücke 14a, 16a in einem aneinander unbefestigten Zustand. Eine Position des Steuerelements 102a in Figur 8 entspricht dem gelösten Zustand der Koppeleinheit 20a.

Das Verlängerungsstück 46a weist eine weitere Verbindungsvorrichtung 10a' auf. Die Verbindungsvorrichtung 10a' ist analog zur Verbindungsvorrichtung 10a ausgebildet und insbesondere zur Befestigung an dem Werkzeug 12a und Kopplung mit dem Werkzeug 12a, insbesondere dem zweiten weiteren Verbindungsstück 16a', vorgesehen.

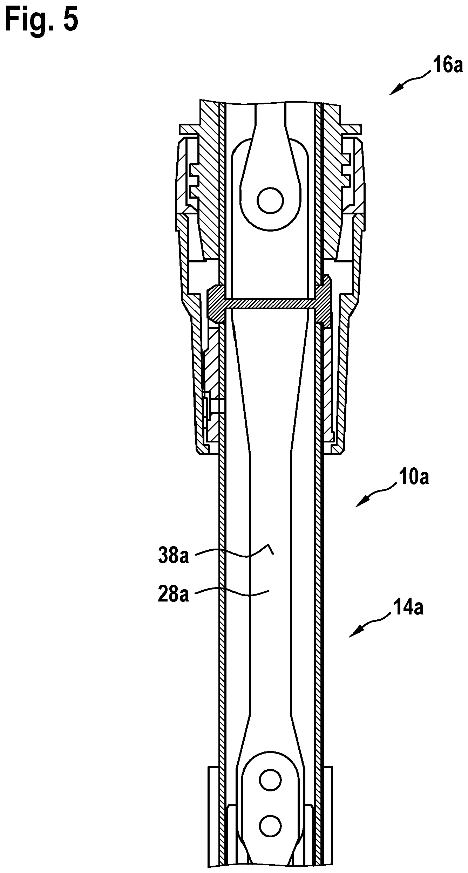

Die Koppelelemente 28a, 30a weisen jeweils eine Kontaktfläche 38a zu einem Zusammenwirken mit der Auslöseeinheit 34a auf. Die Kontaktflächen 38a weisen entlang einer jeweiligen Längserstreckung der Koppelelemente 28a, 30a eine variierende Breite auf (vgl. Figur 5).

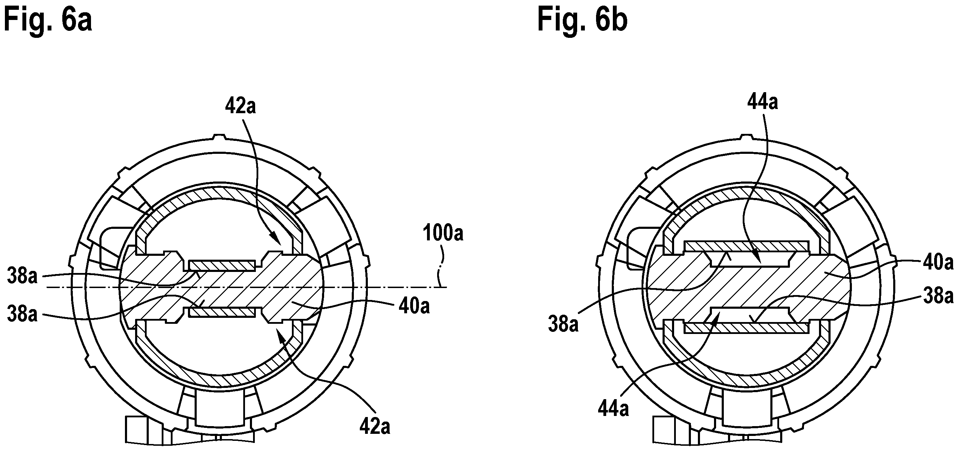

Das Auslöseelement 40a weist zwei voneinander verschiedene Kontaktbereiche 42a, 44a auf, an denen in Abhängigkeit von einer Breite der Kontaktflächen 38a die Koppelelemente 28a, 30a im gekoppelten Zustand anliegen. In Figur 6a liegen die Koppelelemente 28a, 30a mit der Kontaktfläche 38a einer ersten Breite an den Kontaktbereichen 44a des Auslöseelements 40a an. In Figur 6b liegen die Koppelelemente 28a, 30a mit der Kontaktfläche 38a einer zweiten Breite an den Kontaktbereichen 42a des Auslöseelements 40a an. Die erste Breite ist kleiner als die zweite Breite. In Abhängigkeit von einer relativen Position der Koppelelemente 28a, 30a zu dem Auslöseelement 40a, insbesondere betrachtet entlang der Haupterstreckungsachse 52a des Verbindungsstücks, weisen die Kontaktflächen 38a im Bereich des Auslöseelements 40a unterschiedliche Breiten auf. In Abhängigkeit von der relativen Position der Koppelelemente 28a, 30a zu dem Auslöseelement 40a liegen die Kontaktflächen 38a an den Kontaktbereichen 44a oder an den Kontaktbereichen 42a des Auslöseelements 40a an.

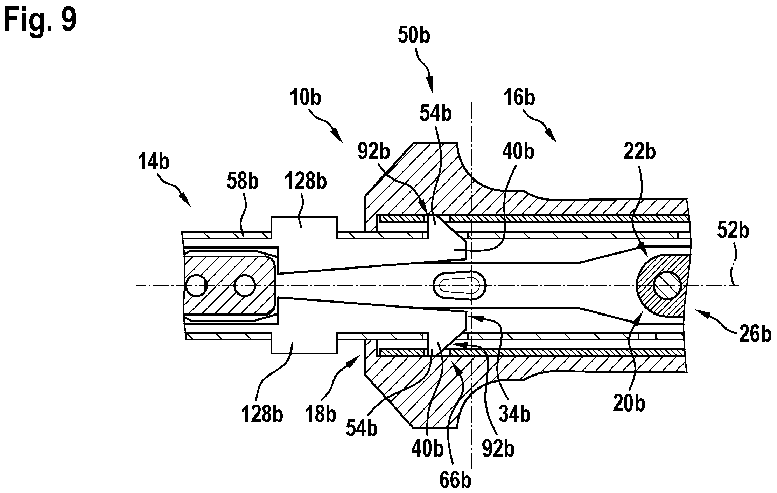

In den Figuren 9 bis 13 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In den Ausführungsbeispielen der Figuren 9 bis 13 ist der Buchstabe a durch die Buchstaben b bis d ersetzt.

Figur 9 zeigt ein Werkzeugsystem 50b mit einer Verbindungsvorrichtung 10b. Die Verbindungsvorrichtung 10b weist ein Verbindungsstück 14b zur Verbindung mit einem weiteren Verbindungsstück 16b auf. Das Werkzeugsystem 50b weist das weitere Verbindungsstück 16b auf. Die Verbindungsvorrichtung 10b weist eine Befestigungseinheit 18b zur Befestigung der Verbindungstücke 14b, 16b aneinander auf.

Die Verbindungsvorrichtung 10b weist eine Koppeleinheit 20b auf. Die Koppeleinheit 20b ist in einem gekoppelten Zustand dazu vorgesehen, eine Antriebskraft, insbesondere eine Zug- und/oder Druckkraft, zwischen den Verbindungsstücken 14b, 16b, insbesondere von dem weiteren Verbindungsstück 16b an das Verbindungsstück 14b zu übertragen.

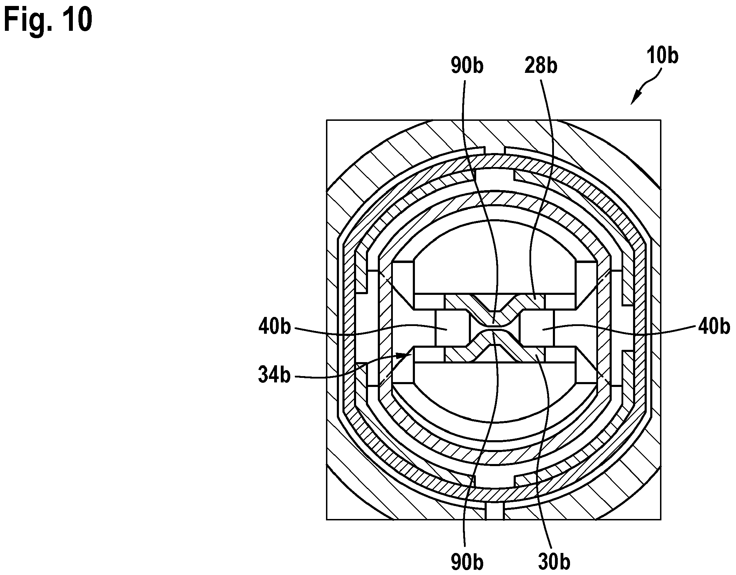

Die Koppeleinheit 20b weist zwei einander gegenüberliegende Koppelstellen 22b (in den Figuren 9 und 10 ist lediglich eine Koppelstelle 22b der zwei Koppelstellen 22b dargestellt) zur Kopplung mit einer Gegenkoppeleinheit 26b des weiteren Verbindungsstücks 16b auf. Die Koppeleinheit 20b weist zwei Koppelelemente 28b, 30b auf. Die zwei Koppelelemente 28b, 30b sind voneinander beabstandet angeordnet. An den Koppelelementen 28b, 30b ist jeweils eine der Koppelstellen 22b angeordnet.

Die Verbindungsvorrichtung 10b weist eine Auslöseeinheit 34b zum Lösen des gekoppelten Zustands auf. Die Auslöseeinheit 34b ist dazu vorgesehen, bei deren Betätigung die zwei Koppelstellen 22b auseinander zu bewegen, insbesondere um die Kopplung mit der Gegenkoppeleinheit 26b zu lösen.

Die Auslöseeinheit 34b ist zu einem Lösen der Koppeleinheit 20b aus dem gekoppelten Zustand durch eine Betätigung der Befestigungseinheit 18b betätigbar.

Die Auslöseeinheit 34b weist zum Lösen des gekoppelten Zustands zwei zwischen die Koppelelemente 28b, 30b schiebbare Auslöseelemente 40b auf. Die Koppelelemente 28b, 30b weisen jeweils eine Erhebung 90b auf (vgl. Figur 10). Die Erhebungen 90b sind auf einander zugewandten Seiten der Koppelelemente 28b, 30b angeordnet. Die Auslöseelemente 40b sind dazu vorgesehen, zur Betätigung der Koppeleinheit 20b, insbesondere zumindest zum Lösen des gekoppelten Zustands, mit den Erhebungen 90b zusammenzuwirken.

Die Auslöseelemente 40b sind linear verschiebbar an dem Verbindungsstück 14b, insbesondere an einem Grundkörper 58b des Verbindungsstücks 14b gelagert. Die Auslöseelemente 40b sind in einer zu einer Haupterstreckungsachse 52b des Verbindungsstücks 14b senkrecht verlaufenden Richtung relativ zu dem Grundkörper 58b verschiebbar angeordnet. Die Auslöseelemente 40b sind relativ zueinander bewegbar.

Die Befestigungseinheit 18b weist zwei Befestigungselemente 54b auf. Die Befestigungselemente 54b sind als Rasthaken ausgebildet. Das weitere Verbindungsstück 16b weist eine Gegenbefestigungseinheit 66b auf. Die Gegenbefestigungseinheit 66b weist zwei Rastausnehmungen 92b auf. Die Rastausnehmungen 92b sind dazu vorgesehen, mit den Befestigungselementen 54b zur Befestigung der Verbindungsstücke 14b, 16b aneinander zusammenzuwirken.

Jeweils eines der Befestigungselemente 54b ist einstückig mit einem der Auslöseelemente 40b ausgebildet. Die Befestigungseinheit 18b weist zwei Betätigungselemente 128b zur Betätigung der Befestigungseinheit 18b und/oder der Auslöseeinheit 34b auf. Die Betätigungselemente 128b sind als Drucktasten ausgebildet. Alternativ ist jedoch auch denkbar, dass die Betätigungselemente 128b als Hebel, Drehtasten oder als andere, einem Fachmann als sinnvoll erscheinende Betätigungselemente 128b ausgebildet sind. Jeweils eines der Betätigungselemente 54b ist einstückig mit einem der Auslöseelemente 40b und einem der Befestigungselemente 54b ausgebildet.

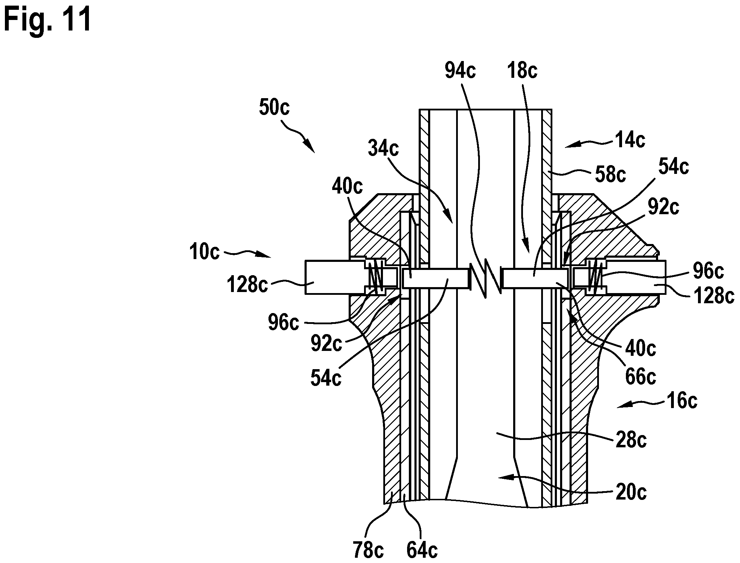

Figur 11 zeigt ein Werkzeugsystem 50c mit einer Verbindungsvorrichtung 10c. Die Verbindungsvorrichtung 10c weist ein Verbindungsstück 14c zur Verbindung mit einem weiteren Verbindungsstück 16c auf. Das Werkzeugsystem 50c weist das weitere Verbindungsstück 16c auf. Die Verbindungsvorrichtung 10c weist eine Befestigungseinheit 18c zur Befestigung der Verbindungstücke 14c, 16c aneinander auf.

Die Verbindungsvorrichtung 10c weist eine Koppeleinheit 20c auf. Die Koppeleinheit 20c ist in einem gekoppelten Zustand dazu vorgesehen, eine Antriebskraft, insbesondere eine Zug- und/oder Druckkraft, zwischen den Verbindungsstücken 14c, 16c, insbesondere von dem weiteren Verbindungsstück 16c an das Verbindungsstück 14c zu übertragen.

Die Koppeleinheit 20c weist zwei einander gegenüberliegende Koppelstellen (hier nicht dargestellt) zur Kopplung mit einer Gegenkoppeleinheit (hier nicht dargestellt) des weiteren Verbindungsstücks 16c auf.

Die Befestigungseinheit 18c weist zwei Befestigungselemente 54c auf. Die Befestigungselemente 54c sind als Bolzen ausgebildet. Die Befestigungselemente 54c sind an einem Grundkörper 58c des Verbindungsstücks 14c gelagert, insbesondere linear.

Das weitere Verbindungsstück 16c weist eine Gegenbefestigungseinheit 66c auf. Die Gegenbefestigungseinheit 66c weist zwei Rastausnehmungen 92c auf. Die zwei Rastausnehmungen 92c sind in einem Grundkörper 64c des weiteren Verbindungsstücks 16c angeordnet. Die Rastausnehmungen 92c sind dazu vorgesehen, mit den Befestigungselementen 54c zur Befestigung der Verbindungsstücke 14c, 16c aneinander zusammenzuwirken.

Die Verbindungsvorrichtung 10c weist eine Auslöseeinheit 34c zum Lösen des gekoppelten Zustands auf. Die Auslöseeinheit 34c ist dazu vorgesehen, bei deren Betätigung die zwei Koppelstellen auseinander zu bewegen, insbesondere um die Kopplung mit der Gegenkoppeleinheit zu lösen. Die Auslöseeinheit 34c ist zu einem Lösen der Koppeleinheit 20c aus dem gekoppelten Zustand durch eine Betätigung der Befestigungseinheit 18c betätigbar.

Die Auslöseeinheit 34c weist zum Lösen des gekoppelten Zustands zwei zwischen zwei Koppelelemente 28c (in Figur 11 ist lediglich eines der Koppelelemente 28c dargestellt) der Koppeleinheit 20c schiebbare Auslöseelemente 40c auf. Jeweils eines der Auslöseelemente 40c ist einstückig mit einem der Befestigungselemente 54c ausgebildet, insbesondere ist jeweils eines der Auslöseelemente 40c durch eines der Befestigungselemente 54c gebildet.

Die Auslöseeinheit 34c weist insbesondere ein Federelement 94c auf. Das Federelement 94c ist zwischen den Auslöseelementen 40c angeordnet. Das Federelement 94c ist dazu vorgesehen, die Auslöseelemente 40c mit einer Kraft in Richtung einer Position zu beaufschlagen, welche insbesondere einem gekoppelten Zustand der Koppeleinheit 20c entspricht.

Das weitere Verbindungsstück 16c weist zwei Betätigungselemente 128c zur Betätigung der Befestigungseinheit 18c und/oder der Auslöseeinheit 34c auf. Die Betätigungselemente 128c sind als Drucktasten ausgebildet. Alternativ ist jedoch auch denkbar, dass die Betätigungselemente 128c als Hebel, Drehtasten oder als andere, einem Fachmann als sinnvoll erscheinende Betätigungselemente 128c ausgebildet sind. Die Betätigungselemente 128c sind, insbesondere über Federelemente 96c des weiteren Verbindungsstücks 14c federvorgespannt, an dem Grundkörper 64c, insbesondere an einer mit dem Grundkörper 64c verbundenen Hülse 78c der Gegenbefestigungseinheit 66c, gelagert. Die Betätigungselemente 128c sind relativ zu den Befestigungselementen 54c und/oder Auslöseelementen 40c beweglich angeordnet. Die Betätigungselemente 128c sind zur Betätigung der Auslöseeinheit 34c und/oder der Befestigungseinheit 18c dazu vorgesehen, mit den Auslöseelementen 40c bzw. den Befestigungselementen 54c zusammenzuwirken.

Durch eine Betätigung der Betätigungselemente 128c, beispielsweise durch einen Bediener, sind die Befestigungselemente 54c aus den Rastausnehmungen 92c bewegbar, vorzugsweise um einen befestigten Zustand der Befestigungseinheit 18c zu lösen. Durch eine Betätigung der Betätigungselemente 128c, beispielsweise durch den Bediener, sind die Auslöseelemente 40c derart zwischen die Koppelelemente 28c schiebbar, dass diese auseinander bewegt werden, insbesondere zum Lösen des gekoppelten Zustands der Koppeleinheit 20c.

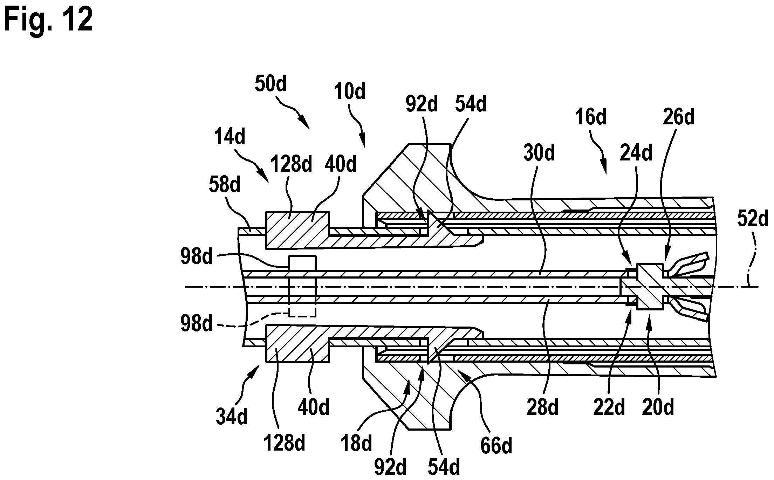

Figur 12 zeigt ein Werkzeugsystem 50d mit einer Verbindungsvorrichtung 10d. Die Verbindungsvorrichtung 10d weist ein Verbindungsstück 14d zur Verbindung mit einem weiteren Verbindungsstück 16d auf. Das Werkzeugsystem 50d weist das weitere Verbindungsstück 16d auf. Die Verbindungsvorrichtung 10d weist eine Befestigungseinheit 18d zur Befestigung der Verbindungstücke 14d, 16d aneinander auf.

Die Verbindungsvorrichtung 10d weist eine Koppeleinheit 20d auf. Die Koppeleinheit 20d ist in einem gekoppelten Zustand dazu vorgesehen, eine Antriebskraft, insbesondere eine Zug- und/oder Druckkraft, zwischen den Verbindungsstücken 14d, 16d, insbesondere von dem weiteren Verbindungsstück 16d an das Verbindungsstück 14d zu übertragen. Die Koppeleinheit 20d weist zwei einander gegenüberliegende Koppelstellen 22d, 24d zur Kopplung mit einer Gegenkoppeleinheit 26d des weiteren Verbindungsstücks 16d auf.

Die Verbindungsvorrichtung 10d weist eine Auslöseeinheit 34d zum Lösen des gekoppelten Zustands auf. Die Auslöseeinheit 34d ist dazu vorgesehen, bei deren Betätigung die zwei Koppelstellen 22d, 24d auseinander zu bewegen, insbesondere um die Kopplung mit der Gegenkoppeleinheit 26d zu lösen.

Die Auslöseeinheit 34d ist zu einem Lösen der Koppeleinheit 20d aus dem gekoppelten Zustand durch eine Betätigung der Befestigungseinheit 18d betätigbar.

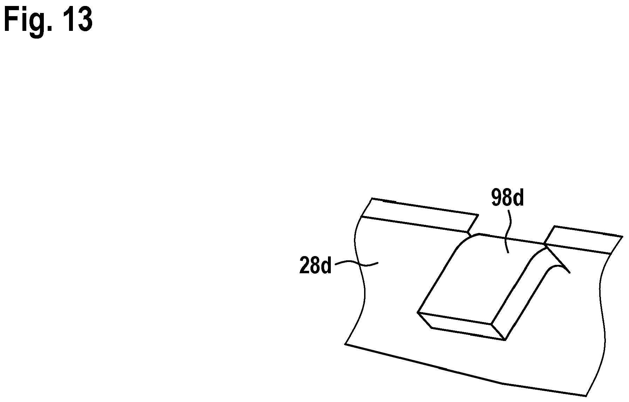

Die Koppelelemente 28d, 30d weisen jeweils einen Fortsatz 98d auf (vgl. Figur 13). Die Auslöseeinheit 34d weist zwei Auslöseelemente 40d auf. Die Auslöseelemente 40d sind dazu vorgesehen, zur Betätigung der Koppeleinheit 20d, insbesondere zumindest zum Lösen des gekoppelten Zustands, mit den Fortsätzen 98d zusammenzuwirken. Die Fortsätze 98d sind abgewinkelt zu einer

Haupterstreckungsebene (hier nicht dargestellt) des jeweiligen Koppelelements 28d, 30d angeordnet. Unter einer "Haupterstreckungsebene" einer Baueinheit oder eines Elements kann eine Ebene verstanden werden, welche parallel zu einer größten Seitenfläche eines kleinstmöglichen gedachten Quaders ist, welcher die Baueinheit gerade noch vollständig umschließt, und insbesondere durch den Mittelpunkt des Quaders verläuft. Bevorzugt verläuft eine Haupterstreckungsebene (hier nicht dargestellt) der Fortsätze 98d zumindest im Wesentlichen senkrecht zu der Haupterstreckungsebene des jeweiligen Koppelelements 28d, 30d.

Die Auslöseelemente 40d sind linear verschiebbar an dem Verbindungsstück 14d, insbesondere an einem Grundkörper 58d des Verbindungsstücks 14d gelagert. Die Auslöseelemente 40d sind in einer zu einer Haupterstreckungsachse 52d des Verbindungsstücks 14d senkrecht verlaufenden Richtung relativ zu dem Grundkörper 58d verschiebbar angeordnet. Die Auslöseelemente 40d sind relativ zueinander bewegbar.

Die Befestigungseinheit 18d weist zwei Befestigungselemente 54d auf. Die Befestigungselemente 54d sind als Rasthaken ausgebildet. Das weitere Verbindungsstück 16d weist eine Gegenbefestigungseinheit 66d auf. Die Gegenbefestigungseinheit 66d weist zwei Rastausnehmungen 92d auf. Die Rastausnehmungen 92d sind dazu vorgesehen, mit den Befestigungselementen 54d zur Befestigung der Verbindungsstücke 14d, 16d aneinander zusammenzuwirken.

Jeweils eines der Befestigungselemente 54d ist einstückig mit einem der Auslöseelemente 40d ausgebildet. Die Befestigungseinheit 18d weist zwei Betätigungselemente 128d zur Betätigung der Befestigungseinheit 18d und/oder der Auslöseeinheit 34d auf. Die Betätigungselemente 128d sind als Drucktasten ausgebildet. Alternativ ist jedoch auch denkbar, dass die Betätigungselemente 128d als Hebel, Drehtasten oder als andere, einem Fachmann als sinnvoll erscheinende Betätigungselemente 128d ausgebildet sind. Jeweils eines der Betätigungselemente 54d ist einstückig mit einem der Auslöseelemente 40d und einem der Befestigungselemente 128d ausgebildet.

## Patentansprüche

1. Verbindungsvorrichtung (10a, 10a'; 10b; 10c; 10d) für ein, insbesondere stabgebundenes, Werkzeug (12a), vorzugsweise eine Werkzeugmaschine, oder für ein Werkzeugsystem (50a; 50b; 50c; 50d), mit zumindest einem Verbindungsstück (14a, 14a'; 14b; 14c; 14d) zur Verbindung mit einem weiteren Verbindungsstück (16a, 16a'; 16b; 16c; 16d), mit einer Befestigungseinheit (18a; 18b; 18c; 18d) zur Befestigung der Verbindungsstücke (14a, 14a', 16a, 16a`; 14b, 16b; 14c, 16c; 14d, 16d) aneinander und mit einer Koppeleinheit (20a; 20b; 20c; 20d), die zumindest in einem gekoppelten Zustand dazu vorgesehen ist, eine Antriebskraft, insbesondere eine Zug- und/oder eine Druckkraft, zwischen den Verbindungsstücken (14a, 14a', 16a, 16a`; 14b, 16b; 14c, 16c; 14d, 16d) zu übertragen, **dadurch gekennzeichnet, dass** die Koppeleinheit (20a; 20b; 20c; 20d) zumindest zwei einander gegenüberliegende Koppelstellen (22a, 24a; 22b; 22d, 24d) zur Kopplung mit einer Gegenkoppeleinheit (26a; 26b; 26c; 26d) des weiteren Verbindungsstücks (16a; 16b; 16c; 16d) aufweist.

2. Verbindungsvorrichtung (10a, 10a'; 10b; 10c; 10d) nach Anspruch 1, **dadurch gekennzeichnet, dass** die Koppeleinheit (20a; 20b; 20c; 20d) zumindest zwei, insbesondere voneinander beabstandete, Koppelelemente (28a, 30a; 28b, 30b; 28c, 30c; 28d, 30d) aufweist, an welchen jeweils eine der Koppelstellen (22a, 24a; 22b; 22d, 24d) angeordnet ist.

3. Verbindungsvorrichtung (10a, 10a'; 10b; 10c; 10d) nach Anspruch 2, **dadurch gekennzeichnet, dass** die Koppelelemente (28a, 30a; 28b, 30b; 28c, 30c; 28d, 30d) aus einem federelastischen Material gebildet sind.

4. Verbindungsvorrichtung (10a, 10a'; 10b; 10c; 10d) nach einem der vorhergehenden Ansprüche, **gekennzeichnet durch** eine Auslöseeinheit (34a; 34b; 34c; 34d) zum Lösen des gekoppelten Zustands, die dazu vorgesehen ist, bei deren Betätigung die zwei Koppelstellen (22a, 24a; 22b; 22d, 24d) auseinander zu bewegen, insbesondere um die Kopplung mit der Gegenkoppeleinheit (26a; 26b; 26c; 26d) zu lösen.

5. Verbindungsvorrichtung (10a, 10a'; 10b; 10c; 10d) nach Anspruch 4, **dadurch gekennzeichnet, dass** die Auslöseeinheit (34a; 34b; 34c; 34d) zu einem Lösen der Koppeleinheit (20a; 20b; 20c; 20d) aus dem gekoppelten Zustand durch eine Betätigung der Befestigungseinheit (18a; 18b; 18c; 18d) betätigbar ist.

6. Verbindungsvorrichtung (10a, 10a'; 10b; 10c; 10d) nach den Ansprüchen 2 und 4, **dadurch gekennzeichnet, dass** die Koppelelemente (28a, 30a; 28b, 30b; 28c, 30c; 28d, 30d) jeweils eine Kontaktfläche (38a) zu einem Zusammenwirken mit der Auslöseeinheit (34a; 34b; 34c; 34d) aufweisen, wobei die Kontaktflächen (38a) entlang einer jeweiligen Längserstreckung der Koppelelemente (28a, 30a; 28b, 30b; 28c, 30c; 28d, 30d) eine variierende Breite aufweisen.

7. Verbindungsvorrichtung (10a, 10a`) nach einem der Ansprüche 4 bis 6, **dadurch gekennzeichnet, dass** die Auslöseeinheit (34a) ein drehbares Auslöseelement (40a) zum Lösen des gekoppelten Zustands aufweist.

8. Verbindungsvorrichtung (10a, 10a') nach den Ansprüchen 6 und 7, **dadurch gekennzeichnet, dass** das Auslöseelement (40a) zumindest zwei voneinander verschiedene Kontaktbereiche (42a, 44a) aufweist, an denen in Abhängigkeit von einer Breite der Kontaktflächen (38a) die Koppelelemente (28a, 30a) im gekoppelten Zustand anliegen.

9. Verbindungsvorrichtung (10b; 10c) nach Anspruch 2 und einem der Ansprüche 4 bis 6, **dadurch gekennzeichnet, dass** die Auslöseeinheit (34b; 34c) zu einem Lösen des gekoppelten Zustands zumindest ein zwischen die Koppelelemente (28b, 30b; 28c, 30c) schiebbares Auslöseelement (34b; 34c) aufweist.

10. Verlängerungsstück (46a; 46b; 46c; 46d) mit einer Verbindungsvorrichtung (10a, 10a'; 10b; 10c; 10d) nach einem der vorhergehenden Ansprüche.

11. Werkzeugaufsatz (48a; 48b; 48c; 48d) mit einer Verbindungsvorrichtung (10a, 10a'; 10b; 10c; 10d) nach einem der Ansprüche 1 bis 9.

12. Werkzeugsystem (50a; 50b; 50c; 50d), insbesondere Werkzeugmaschinensystem, mit einer Verbindungsvorrichtung (10a, 10a'; 10b; 10c; 10d) nach einem der Ansprüche 1 bis 9 und mit dem weiteren Verbindungsstück (16a; 16b; 16c; 16d).

13. Werkzeugsystem (50a; 50b; 50c; 50d) nach Anspruch 12, **dadurch gekennzeichnet, dass** das Verbindungsstück (14a; 14b; 14c; 14d) und das weitere Verbindungsstück (16a; 16b; 16c; 16d) in zumindest zwei unterschiedlichen Ausrichtungen relativ zueinander koppelbar sind.
